# EUROPEAN PATENT APPLICATION

(11) **EP 4 633 136 A1**
(43) Date of publication of application: **15.10.2025**
(21) Application number: 24781011.2
(22) Date of filing: 08.02.2024
(51) Int. Cl.: H04N 13/322, H04N 13/332, H04N 13/327, H04N 13/366, G02B 27/01, G02B 13/00

(54) **ELECTRONIC DEVICE AND METHOD FOR PROVIDING VIRTUAL SPACE IMAGE**

(30) Priority: 27.03.2023 KR 20230039926; 03.05.2023 KR 20230058010
(71) Applicant: Samsung Electronics Co., Ltd., Suwon-si, Gyeonggi-do 16677 (KR)
(72) Inventor: AHN, Stephanie, Suwon-si Gyeonggi-do 16677 (KR); NAM, Myoungwoo, Suwon-si Gyeonggi-do 16677 (KR); PARK, Eunyoung, Suwon-si Gyeonggi-do 16677 (KR); SON, Dongil, Suwon-si Gyeonggi-do 16677 (KR); LEE, Bona, Suwon-si Gyeonggi-do 16677 (KR); LEE, Eunbin, Suwon-si Gyeonggi-do 16677 (KR); CHUNG, Miyeoung, Suwon-si Gyeonggi-do 16677 (KR)
(74) Representative: Gulde & Partner
(86) International application number: PCT/KR2024/001968
(87) International publication number: WO 2024/205017

(57) **Abstract**

A wearable device may comprise: at least one first sensor; a display; lens sets arranged with respect to the display; at least one actuator for the lens sets; and a processor. The wearable device may be configured to: constantly identify movements related to the wearable device through the at least one first sensor while screens provided through the respective lens sets are displayed on the display; identify whether the number of the movements identified during a reference time exceeds a first reference number; adjust the focus of each of the lens sets for providing the screens displayed on the display through the at least one actuator in response to the number exceeding the first reference number; and maintain the adjusted focus on the basis of identifying that the number of the movements identified during the reference time is less than or equal to a second reference number greater than the first reference number within a designated period after the focus of each of the lens sets has been adjusted.

## Description

### [Technical Field]

The present disclosure relates to an electronic device and a method for providing a virtual space image.

### [Background Art]

A wearable device may display an image for providing virtual reality (VR), augmented reality (AR), and/or mixed reality (MR) on a display.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, a wearable device may comprise at least one first sensor, a display, lens sets arranged with respect to the display, at least one actuator for the lens sets, and a processor. The processor may be configured to, while a screen provided through each of the lens sets is displayed on the display, identify movements related to the wearable device through the at least one first sensor. The processor may be configured to identify whether a number of times of the movements identified during a reference time is greater than a first reference number of times. The processor may be configured to, in response to the number of times greater than the first reference number of times, adjust a focus of each of the lens sets for providing the screen displayed on the display through the at least one actuator. The processor may be configured to, based on identifying that the number of times of the movements identified during the reference time is less than or equal to a second reference number of times greater than the first reference number of times, within a designated time interval after adjusting the focus of each of the lens sets, maintain the adjusted focus.

According to an embodiment, a wearable device may comprise at least one inertial measurement unit (IMU) sensor, at least one touch sensor, a display for providing a virtual space, lens sets, at least one actuator for the lens sets, and a processor. The processor may be configured to identify a touch input through the at least one touch sensor, while a virtual space provided through each of the lens sets is displayed on the display. The processor may be configured to identify movements of the wearable device in accordance with the touch input through the at least one IMU sensor. The processor may be configured to identify whether a frequency of the movements identified during a reference time is greater than a first frequency. The processor may be configured to adjust, through the at least one actuator, a focus of each of the lens sets for providing the virtual space displayed on the display, in response to the frequency exceeding the first frequency. The processor may be configured to adjust the focus of each of the lens sets, based on identifying that the frequency of the movements identified during the reference time is greater than a second frequency greater than the first frequency, within a designated time interval after adjusting the at least one actuator.

According to an embodiment, a method executed by a wearable device may comprise, while a screen provided through each of lens sets arranged with respect to a display is displayed on the display, identifying movements related to the wearable device through at least one first sensor. The method may comprise identifying whether a number of times of the movements identified during a reference time is greater than a first reference number of times. The method may comprise, in response to the number of times greater than the first reference number of times, adjusting a focus of each of the lens sets for providing the screen displayed on the display through the at least one actuator. The method may comprise, based on identifying that the number of times of the movements identified during the reference time is less than or equal to a second reference number of times greater than the first reference number of times, within a designated time interval after adjusting the at least one actuator, maintaining the adjusted focus.

As described above, according to an embodiment, a computer-readable storage medium storing one or more programs, the one or more programs may include instructions which, when executed by an electronic device including a processor, cause the wearable device to, while a screen provided through each of lens sets arranged with respect to a display is displayed on the display, identify movements related to the wearable device through at least one first sensor. The one or more programs may include instructions causing the wearable device to identify whether a number of times of the movements identified during a reference time is greater than a first reference number of times. The one or more programs may include instructions causing the wearable device to, in response to the number of times greater than the first reference number of times, adjust a focus of each of the lens sets for providing the screen displayed on the display through at least one actuator. The one or more programs may include instructions causing the wearable device to, based on identifying that the number of times of the movements identified during the reference time is less than or equal to a second reference number of times greater than the first reference number of times, within a designated time interval after adjusting the at least one actuator, maintain the adjusted focus.

According to an embodiment, a wearable device may comprise at least one first sensor, a display, lens sets arranged with respect to the display, at least one actuator for the lens sets, a processor, and memory storing instructions. The instructions, when executed by the processor, may cause the wearable device to identify movements related to the wearable device through the at least one first sensor while a screen provided through each of the lens sets is displayed on the display, identify whether a number of times of the movements identified during a reference time is greater than a first reference number of times, adjust a focus of each of the lens sets for providing the screen displayed on the display through the at least one actuator in response to the number of times greater than the first reference number of times, and maintain the adjusted focus based on identifying that the number of times of the movements identified during the reference time is less than or equal to a second reference number of times greater than the first reference number of times within a designated time interval after adjusting the focus of each of the lens sets.

According to an embodiment, a non-transitory computer readable storage medium is provided. The non-transitory computer readable storage medium may comprise memory storing instructions. The instructions, when executed by a processor of a wearable device, may cause the wearable device to identify movements related to the wearable device through at least one first sensor while a screen provided through each of lens sets arranged with respect to a display is displayed on the display, identify whether a number of times of the movements identified during a reference time is greater than a first reference number of times, adjust a focus of each of the lens sets for providing the screen displayed on the display through at least one actuator in response to the number of times greater than the first reference number of times, and maintain the adjusted focus based on identifying that the number of times of the movements identified during the reference time is less than or equal to a second reference number of times greater than the first reference number of times within a designated time interval after adjusting the at least one actuator.

### [Description of the Drawings]

FIG. 1 illustrates an example of a wearable device according to an embodiment.
FIG. 2 illustrates a block diagram of a wearable device according to an embodiment.
FIGS. 3A to 3B illustrate an example of a movement of a wearable device in accordance with a contact, according to an embodiment.
FIGS. 4A to 4B illustrate an example of an operation of a wearable device for adjusting a focus of lens sets based on a number of times of movements of the wearable device in accordance with a contact, according to an embodiment.
FIGS. 5A to 5B illustrate an example of an operation of a wearable device for adjusting a focus of lens sets based on a motion grade of content according to an embodiment.
FIG. 6 illustrates an example of an operation of an electronic device for adjusting a focus of lens sets after wearing a wearable device according to an embodiment.
FIG. 7 illustrates an example of an operation of a wearable device for adjusting a focus within a designated time interval after adjusting a focus, according to an embodiment.
FIGS. 8A to 8C illustrate a position of a sensor included in a wearable device according to an embodiment.
FIG. 9A illustrates an example of a wearable device in which a distance between lens sets is changed based on a drag input identified in a first housing, according to an embodiment.
FIG. 9B illustrates an example of a wearable device in which a focus of lens sets is changed based on a drag input identified in a second housing, according to an embodiment.
FIG. 10 illustrates an example of an operation of a wearable device in which a focus is changed based on a drag input, according to an embodiment.
FIGS. 11A to 11B illustrate an example of a wearable device in which a position of an image representing a virtual space is changed based on a touch input, according to an embodiment.
FIG. 11C illustrates an example of a wearable device in which a virtual object included in a virtual space displayed based on a touch input is changed according to an embodiment.
FIG. 12 illustrates an example of a wearable device executing a software application for a focus change based on a drag input, according to an embodiment.
FIG. 13 illustrates an example of a wearable device for identifying an input for performing a focus change through a gaze tracking, according to an embodiment.
FIG. 14A illustrates an example of a perspective view of a wearable device according to an embodiment.
FIG. 14B illustrates an example of one or more hardware disposed in a wearable device according to an embodiment.
FIGS. 15A to 15B illustrate an example of an exterior of a wearable device according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In the following description, terms referring to a time interval (e.g., time interval, interval, time spacing, gap), terms referring to lens set (e.g., lens set, lens system), terms referring to components of the device, and the like are exemplified for convenience of explanation. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' means at least one of elements from A (including A) to B (including B). Hereinafter, 'C' and/or 'D' means that at least one of 'C' or 'D', that is, {'C', 'D', 'C' and 'D'}.

The present disclosure describes various embodiments using terms used in some communication standards (e.g., 3rd Generation Partnership Project (3GPP), extensible radio access network (xRAN), open-radio access network (O-RAN) , but it is only an example for explanation. Various embodiments of the present disclosure may be easily modified and applied in other communication systems.

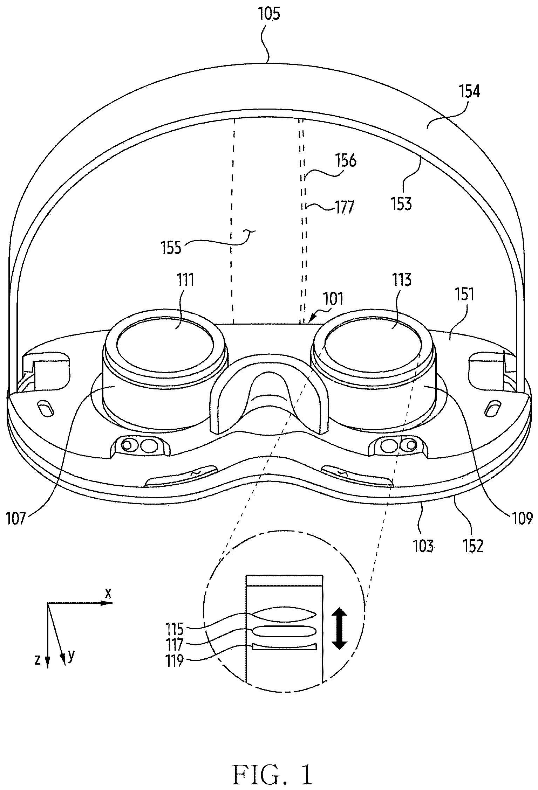

FIG. 1 illustrates an example of a wearable device according to an embodiment.

Referring to FIG. 1, a wearable device 101 may provide an image representing a virtual space. The wearable device 101 may include a first housing 103 and a second housing 105. The first housing 103 may include a display. The second housing 105 may be connected to the first housing 103. The first housing 103 may include a first moving flange 107 and a second moving flange 109. The first moving flange 107 may include a lens set 111. The second moving flange 109 may include a lens set 113. Each of the lens sets (e.g., the lens set 111 and the lens set 113) may include a plurality of lenses (e.g., a first lens 115, a second lens 117, and/or a third lens 119).

According to an embodiment, a user may wear the wearable device 101. When the wearable device 101 is worn by the user, a first surface 151 of the first housing 103 and a third surface 153 of the second housing 105 may face a part of the user's body. For example, the first housing 103 may include the first surface 151 and a second surface 152 spaced apart from the first surface 151. A direction (e.g., + z direction) in which the second surface faces may face a direction, which is opposite to a direction (e.g., - z direction) in which the first surface 151 faces. For example, the second housing 105 may include the third surface 153 and a fourth surface 154 spaced apart from the third surface 153.

According to an embodiment, when the wearable device 101 is worn on the user's head, the first surface 151 of the first housing 103 may face the user's face. When the wearable device 101 is worn on the user's head, the first moving flange 107 and a left eye may face each other, and the second moving flange 109 and a right eye may face each other. According to an embodiment, when the wearable device 101 is worn on the user's head, the third surface 153 of the second housing 105 may face the user's head.

According to an embodiment, the second surface 152 of the first housing 103 and the fourth surface 154 of the second housing 105 may include a sensor (e.g., a touch sensor) for identifying a contact. The first housing 103 and the second housing 105 may be connected to each other through a detachable strap 177. The strap 177 may include a fifth surface 155 and a sixth surface 156. When the user wears the wearable device 101, a sensor (e.g., a touch sensor) for identifying a contact on the sixth surface 156, which is opposite to the fifth surface 155 facing the user, may be included. The wearable device 101 may identify the user's contact through a sensor.

According to an embodiment, the wearable device 101 may execute a software application (e.g., a game application, a productivity application (e.g., a calendar application, a note application), and a virtual reality (VR) application) for providing a virtual space. The wearable device 101 may identify whether content of an application is a designated type of content. The designated type may be displayed in a store (e.g., PlayStore, AppStore) in which applications are registered. According to the type, what accessories (e.g., gun, controller, physical keyboard) are required for the content of the corresponding application in the wearable device 101 may be designated. For example, a productivity application may require a physical keyboard. The wearable device 101 may identify whether an application for providing a virtual space is a productivity application. After identifying that the application is the productivity application, the wearable device 101 may determine that the content is content requiring a physical keyboard. In addition, for example, a virtual reality (VR) application may require a controller. The wearable device 101 may identify whether an application for providing a virtual space is a VR application. After identifying that the application is the VR application, the wearable device 101 may determine that the content is content requiring a controller. The wearable device 101 may display a virtual space on a display in the first housing 103, based on executing an application for providing the virtual space. When the user wears the wearable device 101, the wearable device 101 may provide a virtual space to the user, by displaying a virtual space image on the display.

According to an embodiment, the user may obtain light emitted from the display through the lens sets 111 and 113. The lens sets 111 and 113 may refract light emitted from the display so that the wearable device 101 may provide a virtual reality. According to an embodiment, when the wearable device 101 is worn by the user, the lens sets 111 and 113 may face the user's body. For example, when the wearable device 101 is worn on the user's head, the lens sets 111 and 113 may face the user's eye. According to an embodiment, the lens set 111 may include a plurality of lenses (e.g., the first lens 115, the second lens 117, and/or the third lens 119) disposed on the first moving flange 107. The lens set 113 may include a plurality of lenses 115, 117, and 119 disposed on the second moving flange 109. The wearable device 101 may adjust a focus of each of the lens sets 111 and 113, by adjusting a distance between the plurality of lenses 115, 117, and 119.

According to an embodiment, the wearable device 101 may identify a movement according to a contact through a first sensor (e.g., an inertial measurement unit (IMU) sensor). The wearable device 101 may identify a contact through a second sensor (e.g., a touch sensor). When the user wears the wearable device 101, lens sets included in the wearable device 101 are not focused, and thus blurred vision may occur. When blurred vision occurs, the user may adjust a position of the wearable device 101 with respect to a body (e.g., the face) due to discomfort. In a process in which the user adjusts the position of the wearable device 101, a contact and a movement of the wearable device 101 in accordance with the contact may be identified through sensors. For example, a contact (e.g., a touch input) with the wearable device 101 may be identified through a second sensor (e.g., a touch sensor). For example, the movement of the wearable device 101 in accordance with the contact may be identified through a first sensor (e.g., the inertial measurement unit (IMU) sensor).

According to an embodiment, the wearable device 101 may adjust a focus of each of the lens sets 111 and 113, when the movement of the wearable device 101 in accordance with the contact is identified as greater than a reference number of times during a reference time. However, the embodiment of the present disclosure may not be limited thereto. According to an embodiment, when the movement of the wearable device 101 in accordance with the contact is identified as greater than or equal to the reference number of times during the reference time, the wearable device 101 may execute a calibration application for increasing accuracy of gaze tracking. The wearable device 101 may display a virtual object for tracking the user's gaze on the display, based on executing the calibration application for increasing the accuracy of gaze tracking. The wearable device 101 may track the user's pupil based on executing the calibration application. The wearable device 101 may increase the accuracy of the user's gaze tracking, by comparing a movement path of the user's pupil with a movement path of the virtual object.

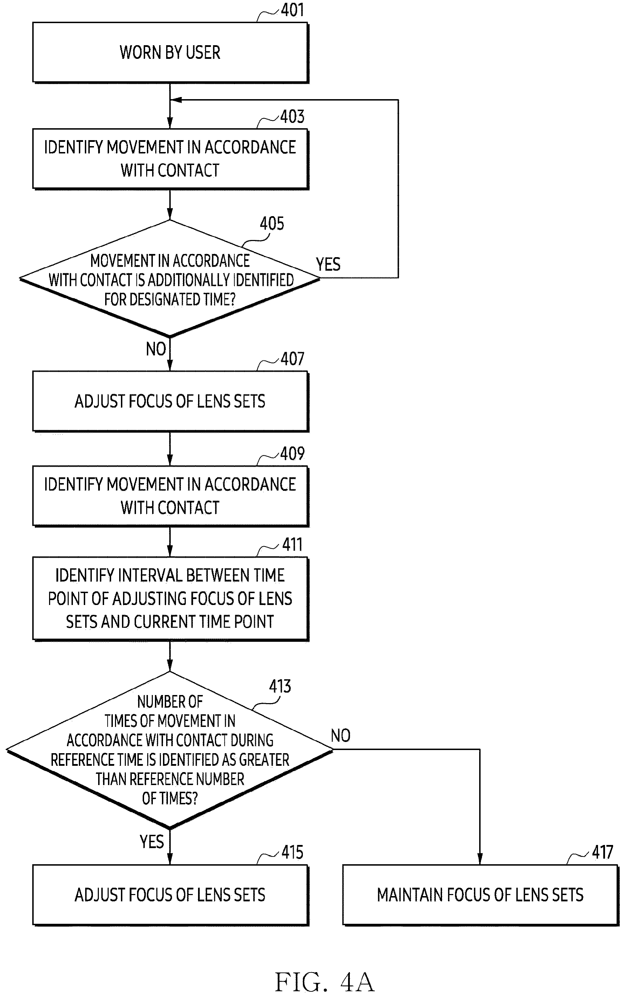

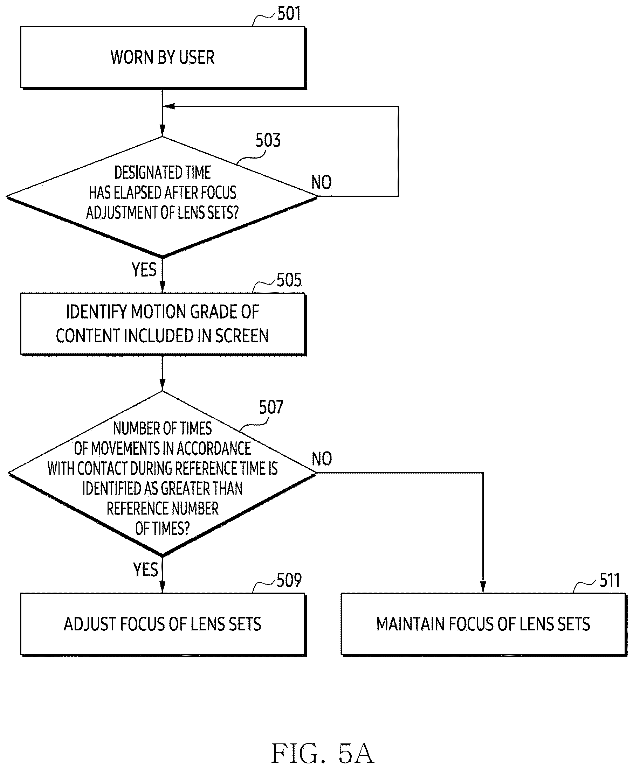

According to an embodiment, the movement of the wearable device 101 in accordance with the contact may be caused by a cause other than a focus mismatch. For example, in a process of adjusting a wearing position, the movement of the wearable device 101 in accordance with the contact may be identified. For example, in a process of the user scratching or rubbing a part of the body, the movement of the wearable device 101 in accordance with the contact may be identified. According to an embodiment, the wearable device 101 may change a size of the reference number of times, which is a reference for determining whether to adjust the focus, in order to reduce a focus adjustment in accordance with the movement of the wearable device 101 caused by the caused other than focus mismatch. For example, according to a time elapsed after adjusting the focus of each of the lens sets 111 and 113, the size of the reference number of times, which is the reference for determining whether to adjust the focus, may be changed. The wearable device 101 may adjust the focus of each of the lens sets 111 and 113 through at least one actuator, based on identifying the number of times of movements identified exceeding a third reference number of times during the reference time within a designated first time interval after adjusting the focus of each of the lens sets 111 and 113. The wearable device 101 may adjust the focus of each of the lens sets 111 and 113 through at least one actuator, based on identifying the number of times of the movements identified during the reference time by exceeding a fourth reference number of times less than the third reference number of times during the reference time, within a designated second time interval after adjusting the focus of each of the lens sets 111 and 113. The second time interval may be after the first time interval. A change in the reference number of times in accordance with the time elapsed after the focus adjustment will be described in FIGS. 4A to 4B below. For example, according to content of a screen displayed in the wearable device 101, the size of the reference number of times, which is a reference for determining whether to adjust the focus, may be changed. The wearable device 101 may identify a motion grade of the content in accordance with magnitude of a motion requested by the content included in the screen. For example, the magnitude of the motion may be a movement distance between a start point and end point of the motion. The wearable device 101 may adjust the focus of each of the lens sets 111 and 113 through at least one actuator, based on identifying the first motion grade, in response to the number of times of movements of the wearable device 101 in accordance with the contact identified during the reference time, exceeding the fifth reference number of times. The wearable device 101 may adjust the focus of each of the lens sets 111 and 113 through at least one actuator, based on identifying a second motion grade of a content in which a motion having a size smaller than the size of the motion corresponding to the first motion grade is requested, in response to the number of times of the movements in accordance with the contact exceeding a sixth reference number of times less than the fifth reference number of times. A change in the reference number of times in accordance with the motion grade is described below with reference to FIGS. 5A to 5B.

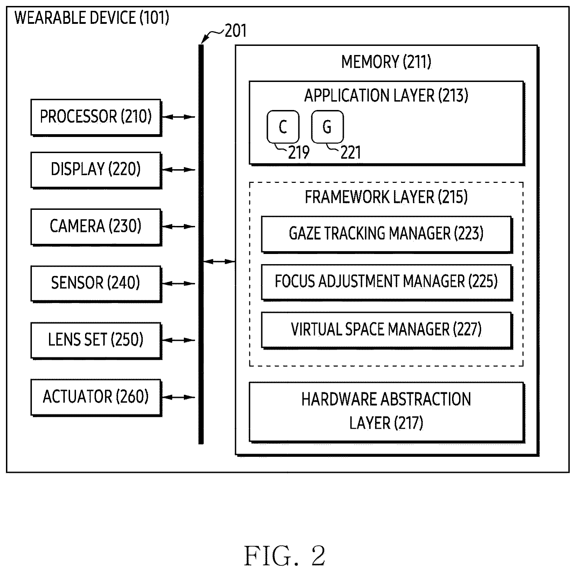

As described above, the wearable device 101 is described in FIG. 1. Hereinafter, a hardware component and a software application included in the wearable device 101 are illustrated in FIG. 2.

FIG. 2 illustrates a block diagram of a wearable device according to an embodiment. A wearable device 101 of FIG. 2 may include the wearable device 101 of FIG. 1.

Referring to FIG. 2, the wearable device 101 may include at least one of a processor 210, memory 211, a display 220, a camera 230, a sensor 240, a lens set 250, and an actuator 260. The processor 210, the memory 211, the display 220, the camera 230, the sensor 240, the lens set 250, and/or the actuator 260 may be electronically and/or operably coupled with each other by an electronic component such as a communication bus 201. An application 219 for providing a virtual space, an application 221 for a focus adjustment, a gaze tracking manager 223, a focus adjustment manager 225, and a virtual space manager 227 may be stored in the memory 211 of the wearable device 101. Programs installed by the wearable device 101 may be classified into one layer of an application layer 213, a framework layer 215, and/or a hardware abstraction layer 217 based on a target.

According to an embodiment, hereinafter, hardware being operably coupled may mean that a direct or indirect connection between the hardware is established by wire or wirelessly, so that the second hardware is controlled by the first hardware among the hardware. Although illustrated based on different blocks, the embodiment is not limited thereto, and a portion (e.g., at least a portion of the processor 210 and the memory 211) of hardware of FIG. 2 may be included in a single integrated circuit such as a system on a chip (SoC). A type and/or number of hardware included in the wearable device 101 is not limited as illustrated in FIG. 2. For example, the wearable device 101 may include only a portion of the hardware components illustrated in FIG. 2.

In an embodiment, the processor 210 of the wearable device 101 may include hardware for processing data based on one or more instructions. For example, hardware for processing data may include an arithmetic and logic unit (ALU), a floating point unit (FPU), a field programmable gate array (FPGA), a central processing unit (CPU), and/or an application processor (AP). The processor 210 may have a structure of a single-core processor, or may have a structure of a multicore processor such as a dual core, a quad core, or a hexa core.

According to an embodiment, the processor 210 may represent a virtual space on the display 220, based on executing the application 219 for providing a virtual space. While providing the virtual space, the processor 210 may identify a movement of the wearable device 101 in accordance with a contact through the sensor 240.

According to an embodiment, the processor 210 may execute the application 221 for a focus adjustment, based on identifying whether the movement of the wearable device 101 satisfies a designated condition. The processor 210 may execute the focus adjustment manager 225, based on executing the application 221 for a focus adjustment. The processor 210 may change a focus of the lens set 250 by controlling a distance between lenses included in the lens set 250 through the actuator 260, based on executing the focus adjustment manager 225. For example, the designated condition may be whether the movement of the wearable device 101 in accordance with the contact is identified as greater than a reference number of times during a reference time. The number of times of the movements of the wearable device 101 in accordance with the contact during the reference time may be referred to as a frequency of the movement of the wearable device 101 in accordance with the contact. When the user wears the wearable device 101, lens sets included in the wearable device 101 are not focused, and thus blurred vision may occur. When blurred vision occurs, the user may adjust a position of the wearable device 101 with respect to a body (e.g., the face) due to discomfort. In a process in which the user adjusts the position of the wearable device 101, a contact and a movement of the wearable device 101 in accordance with the contact may be identified through the sensor 240. According to an embodiment, the wearable device 101 may change a size of a reference number of times, which is a reference for determining whether to adjust the focus according to a time elapsed after adjusting a focus of the lens set 250, in order to reduce focus adjustment in accordance with the movement of the wearable device 101 caused by a cause other than focus mismatch. According to an embodiment, in order to reduce unnecessary focus adjustment, the wearable device 101 may change a size of the reference number of times, which is a reference for determining whether to adjust the focus according to magnitude of motion requested in content displayed on the screen.

In an embodiment, the memory 211 of the wearable device 101 may include a hardware component for storing data and/or instructions inputted to and/or outputted from the processor 210 of the wearable device 101. For example, the memory 315 may include a volatile memory such as random-access memory (RAM) and/or a non-volatile memory such as read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), and an embedded multi-media card (eMMC).

In an embodiment, the wearable device 101 may display a virtual space on the display 220. For example, the display 220 may output visualized information to the user by being controlled by the processor 210 including a circuit such as a graphic processing unit (GPU). The display 220 may include a flat panel display (FPD) and/or electronic paper. The FPD may include a liquid crystal display (LCD), a plasma display panel (PDP), and/or one or more light emitting diodes (LEDs). The LED may include an organic LED (OLED). According to an embodiment, a screen representing a virtual space displayed on the display 220 may be provided to the user through the lens set 250.

According to an embodiment, the wearable device 101 may track a gaze of the user wearing the wearable device 101 through the camera 230. The camera 230 may include a camera for eye tracking (ET). The eye tracking (ET) camera may detect and track a pupil. The eye tracking (ET) camera may include a GS camera to detect a pupil and track a fast pupil movement. The GS camera may detect a fast movement and a fine motion. The GS camera may reduce an image attraction phenomenon. The eye tracking (ET) camera may be installed for left and right eyes, respectively. The performance and standard of the left-eye camera and the right-eye camera may be the same.

According to an embodiment, the sensor 240 may include a touch sensor and an inertial measurement unit (IMU) sensor. The IMU sensor may include an acceleration sensor and/or a gyro sensor. The wearable device 101 may identify the movement of the wearable device 101 based on the IMU sensor. The wearable device 101 may identify a degree of movement in accordance with the contact of the wearable device 101, based on the IMU sensor.

According to an embodiment, a program designed to target a user controlling the wearable device 101 may be classified into the application layer 213. For example, a program classified into the application layer 213 may include the application 219 for providing a virtual space, the application 221 for a focus adjustment, and/or an application (not shown) for calibration. As an example, in order to adjust a focus through the actuator 260, the wearable device 101 may execute the application 219 for the focus adjustment. In addition, as an example, the wearable device 101 may execute the application, in order to track the gaze. However, the embodiment of the present disclosure may not be limited thereto. For example, the program classified into the application layer 213 may cause execution of a function supported by programs classified into the framework layer 215, by calling API. The processor 210 may display a virtual space image on the display 220, based on executing the application 219 for providing the virtual space. The processor 210 may adjust the focus of the lens set 250 through the actuator 260, based on executing the application 219 for the focus adjustment. The processor 210 may increase the accuracy of eye tracking by comparing a position of user's tracked pupil with a position of the corresponding virtual object based on executing the application for calibration. The application 221 for the focus adjustment and/or the application for calibration may be executed based on the movement of the wearable device 101 in accordance with a contact identified while the application 219 for providing the virtual space is being executed. In addition, according to an embodiment, the application 221 for the focus adjustment and the application for calibration may be implemented as a single application. For example, the wearable device 101 may adjust a focus of the wearable device 101 through the application for calibration.

According to an embodiment, the wearable device 101 may adjust a distance between lenses included in the lens set 250, based on execution of the focus adjustment manager 225 in the framework layer 215. Since the lens set 250 is formed of a plurality of lenses, the overall focus of the lens set 250 may be changed by adjusting the distance between the plurality of lenses.

According to an embodiment, the wearable device 101 may track a gaze of the user wearing the wearable device 101, based on executing the gaze tracking manager 223 in the framework layer 215. The wearable device 101 may display a virtual object for tracking the user's gaze on the display, based on executing a calibration application for increasing the accuracy of gaze tracking. The wearable device 101 may increase the accuracy of gaze tracking by comparing a position of the user's tracked pupil and a position of the corresponding virtual object, based on executing the calibration application.

According to an embodiment, the wearable device 101 may render a virtual space, based on execution of the virtual space manager 227 in the framework layer 215. The wearable device 101 may display the rendered virtual space on the display 220.

According to an embodiment, programs (e.g., driver) designed to target hardware (e.g., the display 220 and/or the sensor 240) of the wearable device 101 may be classified into the hardware abstraction layer 217.

According to an embodiment, the actuator 260 may change a physical state by using a change of an electrical signal. For example, the actuator 260 may adjust the distance between the plurality of lenses configuring the lens set 250, based on a signal for focus adjustment.

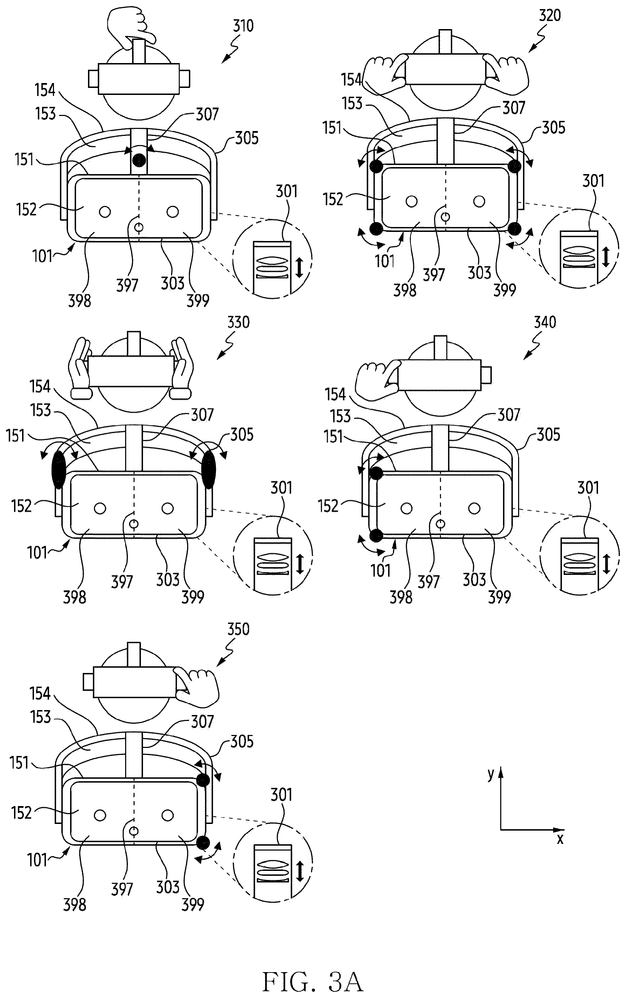

As described above, FIG. 2 describes the focus adjustment according to the movement of the wearable device 101 in accordance with the contact. Hereinafter, FIGS. 3A to 3B describe the movement of the wearable device 101 in accordance with the contact.

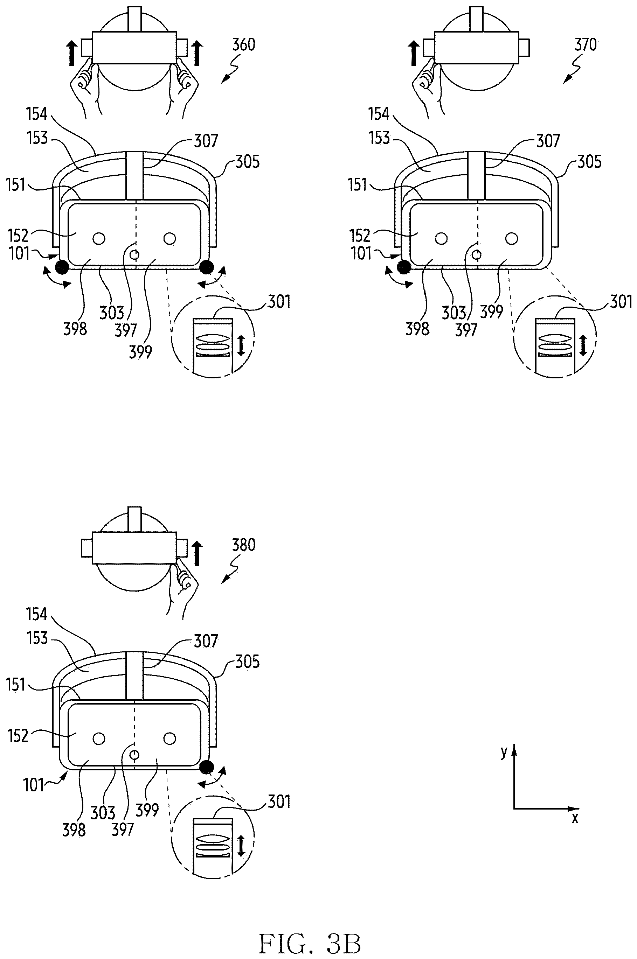

FIGS. 3A to 3B illustrate an example of a movement of a wearable device in accordance with a contact, according to an embodiment. A wearable device 101 of FIGS. 3A and 3B may include the wearable device 101 of FIGS. 1 and 2.

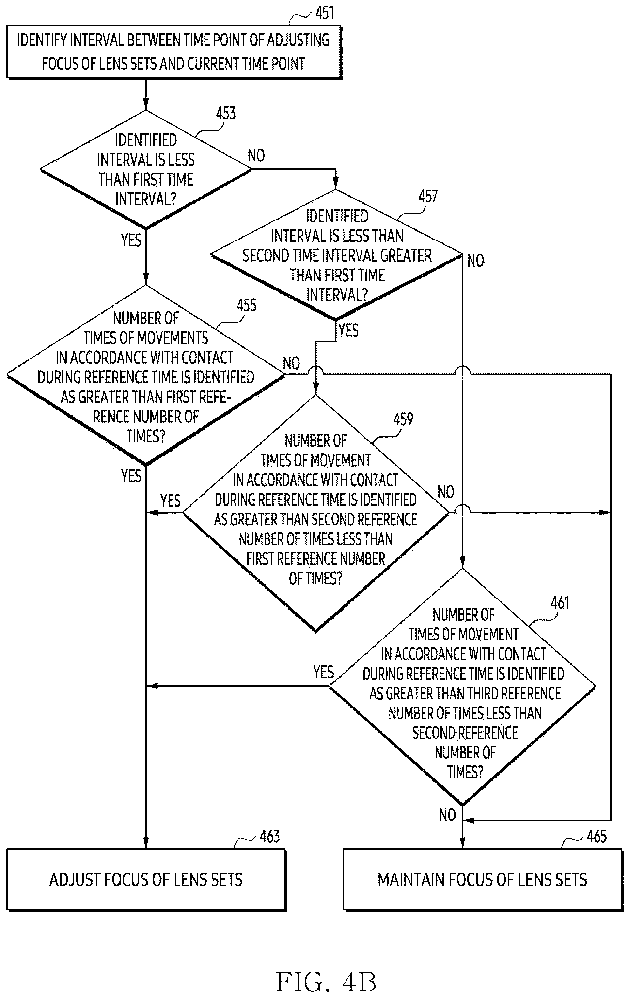

Referring to FIGS. 3A to 3B, in state 310 to 380, a user may wear the wearable device 101 on their head. The wearable device 101 may include a first housing 303 for providing a virtual space, a second housing 305 connected to the first housing 303, and/or a strap 307 (e.g., the strap 177) connecting the first housing 303 and the second housing 305. The strap 307 may be connected to or detached from the first housing 303 and/or the second housing 305. The wearable device 101 may include a moving flange 301 including a lens set (e.g., the lens set 250 of FIG. 2). A focus of the lens set 250 may be adjusted by adjusting a distance between a plurality of lenses included in the lens set 250. According to an embodiment, lens sets included in the wearable device 101 are not focused, and thus blurred vision may occur. When blurred vision occurs, the user may adjust a position of the wearable device 101 with respect to a body (e.g., face) due to discomfort. While the position of the wearable device 101 is being adjusted, the wearable device 101 may identify a contact (e.g., a touch input) through a sensor (e.g., the sensor 240 of FIG. 2) (e.g., the touch sensor). The wearable device 101 may identify a movement of the wearable device 101 in accordance with a contact, through a sensor (e.g., the sensor 240 of FIG. 2) (e.g., the IMU sensor). The wearable device 101 may adjust the focus of the lens set 250, based on identifying a contact and a movement of the wearable device 101 in accordance with the contact. The movement of the wearable device 101 in accordance with the contact may be identified in case that a contact (e.g., a touch input) and a movement are identified. When identifying the movement of the wearable device 101 in accordance with the contact as greater than or equal to a reference number of times during a reference time through the sensor 240, the wearable device 101 may adjust a focus of the lens set 250. In the following states 310 to 380, a description of a position of a contact point identified by the wearable device 101 may be described. A reference for setting the reference number of times is described in description of FIGS. 4A or 4B.

According to an embodiment, the first housing 303, the second housing 305, and/or the strap 307 may include a touch sensor. For example, when the user wears the wearable device 101, the touch sensor may be included on a second surface 152, which is spaced apart from and opposite to a first surface 151 of the first housing 303 facing a part (e.g., face) of the user's body. For example, when the user wears the wearable device 101, the touch sensor may be included on a fourth surface 154, which is opposite to a third surface 153 of the second housing 305 facing the user. For example, when the user wears the wearable device 101, the touch sensor may be included on a sixth surface 156, which is opposite to a fifth surface 155 of the strap 307 facing the user.

According to an embodiment, the first housing 303 may configured with a first portion 399 and a second portion 398. The first portion 399 may be a portion (e.g., a portion of the first housing 303 corresponding to + x direction with respect to a center line 397) corresponding to a left eye with respect to a center line of the second surface 152 of the first housing 303 when the user wears the wearable device 101. The second portion 398 may be a portion (e.g., a portion of the first housing 303 corresponding to -x direction with respect to the center line 397) corresponding to a right eye with respect to the center line of the second surface 152 of the first housing 303 when the user wears the wearable device 101.

According to an embodiment, a user may grip a portion (e.g., a portion of the first housing 303, a portion of the second housing 305, or a portion of the strap 307) of the wearable device 101 to change a position of the wearable device 101. While the user adjusts the position of the wearable device 101, a part (e.g., hand) of the user's body may contact a portion of the wearable device 101. The wearable device 101 may identify a touch input through a sensor in the portion (e.g., the portion of the first housing 303, the portion of the second housing 305, or the portion of the strap 307). A plurality of touch inputs may be identified by a plurality of fingers of the user.

In a state 310, the wearable device 101 may identify a touch input through a sensor in the strap 307.

In a state 320, while the user adjusts a position of the wearable device 101, the wearable device 101 may identify the touch input through a sensor in the first housing 303. The user may grip edge portions according to a plurality of positions of the first housing 303 with respect to the first portion 399 and the second portion 398, in order to change the position of the wearable device 101.

In a state 330, while the user adjusts the position of the wearable device 101, the wearable device 101 may identify a touch input through a sensor in the second housing 305. The user may grip portions according to a plurality of positions of the second housing 305 with respect to the first portion 399 and the second portion 398, in order to change the position of the wearable device 101.

In a state 340, while the user adjusts the position of the wearable device 101, the wearable device 101 may identify the touch input through the sensor in the first housing 303. The user may grip edge portions according to a plurality of positions of the first housing 303 with respect to the second portion, in order to change the position of the wearable device 101.

In a state 350, while the user adjusts the position of the wearable device 101, the wearable device 101 may identify the touch input through the sensor in the first housing 303. The user may grip edge portions according to a plurality of positions of the first housing 303 with respect to the first portion 399, in order to change the position of the wearable device 101.

In a state 360, while the user adjusts the position of the wearable device 101, the wearable device 101 may identify the touch input through the sensor in the first housing 303. The user may grip an edge portion according to a single position (e.g., pre-designated position) of the first housing 303 with respect to the first portion 399 and an edge portion according to a single position (e.g., pre-designated position) of the first housing 303 with respect to the second portion, in order to change the position of the wearable device 101.

In a state 370, while the user adjusts the position of the wearable device 101, the wearable device 101 may identify the touch input through the sensor in the first housing 303. The user may grip an edge portion according to a single position (e.g., pre-designated position) of the first housing 303 with respect to the second portion, in order to change the position of the wearable device 101.

In a state 380, while the user adjusts the position of the wearable device 101, the wearable device 101 may identify the touch input through the sensor in the first housing 303. The user may grip an edge portion according to a single position (e.g., pre-designated position) of the first housing 303 with respect to the first portion 399, in order to change the position of the wearable device 101.

As described above, the wearable device 101 may identify a touch input, based on a sensor (e.g., the sensor 240 of FIG. 2) (e.g., the touch sensor) included in the first housing 303, the second housing 305, and/or the strap 307. The wearable device 101 may identify a movement of the wearable device 101 according to a touch input through a sensor (e.g., the sensor 240 of FIG. 2) (e.g., the IMU sensor). When the touch input and the movement of the wearable device 101 are identified together, the wearable device 101 may identify the movement of the wearable device 101 in accordance with the contact. The wearable device 101 may adjust a focus of the lens set 250, when identifying, through the sensor 240, the number of times of movements of the wearable device 101 in accordance with the contact greater than or equal to a reference number of times during a reference time. The number of times of movements of the wearable device 101 in accordance with the contact may be identified regardless of a position at which the touch input occurs. For example, if a touch input for the strap 307 such as the state 310 and a touch input for the first housing 303 such as state 320 occur in sequence while the user adjusts the position of the wearable device 101, the number of times of movements of the wearable device 101 in accordance with the contact may be two.

According to an embodiment, the wearable device 101 may identify the movement of the wearable device 101 in accordance with the contact, based on a touch input for a contact greater than or equal to reference extent on a reference area. The reference area may include an area including the touch sensor of the first housing 303 and an area including the touch sensor of the second housing 305.

According to an embodiment, in case that the movement in accordance with the contact is identified with respect to the first portion 399 based on a center line of the second surface 152 of the first housing 303, the wearable device 101 may adjust a focus of lens set (e.g., the lens set 111 of FIG. 1), which is one of the lens sets 250 and corresponds to the first portion 399. In case that the movement in accordance with the contact is identified with respect to the second portion 398 different from the first portion 399 based on the center line of the second surface 152 of the first housing 303, the wearable device 101 may adjust a focus of lens set (e.g., the lens set 113 of FIG. 1), which is one of the lens sets 250 and corresponds to the second portion.

In FIGS. 3A to 3B, a position at which the touch input occurs is described as being designated, but the embodiment of the present disclosure may not be limited thereto. According to an embodiment, a touch input for the first housing 303 may be identified not only at a close portion of a corner (e.g., edge) of the first housing 303, but also at any portion of the first housing 303.

FIGS. 4A to 4B illustrate an example of an operation of a wearable device for adjusting a focus of lens sets based on a number of times of movements of the wearable device in accordance with a contact, according to an embodiment. The wearable device performing operations of FIGS. 4A and 4B may include the wearable device 101 of FIGS. 1 to 3B.

Referring to FIG. 4A, in operation 401, a wearable device (e.g., the wearable device 101 of FIG. 1) may be worn by a user. The wearable device 101 may display a virtual space on a display (e.g., the display 220 of FIG. 2) based on executing an application for providing a virtual space. The user may identify an image displayed on the display 220 through lens sets (e.g., the lens set 250 of FIG. 2). According to an embodiment, the user may obtain light emitted from the display 220 through the lens sets 250. The lens sets 250 may refract the light emitted from the display 220 so that the wearable device 101 may provide a virtual reality. According to an embodiment, when the wearable device 101 is worn by the user, the lens sets 250 may face a body of the user. For example, the lens sets 250 may face the user's eye when the wearable device 101 is worn on the user's head.

In operation 403, the wearable device 101 may identify a movement in accordance with contact. The wearable device 101 may identify a touch input through a sensor (e.g., the touch sensor). The wearable device 101 may identify a movement of the wearable device 101 in accordance with a touch input through a sensor (e.g., the IMU sensor). The user may move the wearable device 101 to bring the wearable device 101 into close contact with the user's body after wearing the wearable device 101. For example, the movement of the wearable device 101 in accordance with a contact may occur by adjusting a length of a second housing (e.g., the second housing 305 of FIGS. 3A to 3B) and/or coupling or detaching a strap (e.g., the strap 307 of FIGS. 3A to 3B).

In operation 405, the wearable device 101 may identify whether a movement in accordance with a contact is additionally identified for a designated time. In case that the movement in accordance with the contact is additionally identified for the designated time, the wearable device 101 may perform operation 403. In case that the movement in accordance with the contact is not additionally identified for the designated time, the wearable device 101 may perform operation 407. This is because when the movement in accordance with the contact is not additionally identified for the designated time, it may be identified that an additional position adjustment for the wearable device 101 is completed.

In operation 407, the wearable device 101 may adjust a focus of lens sets. The user may obtain light emitted from the display 220 through the lens sets 250. As the focus of the lens sets 250 is adjusted, the user may identify a screen clearly or blurrily. In order to improve user convenience, after wearing of the wearable device 101 and the additional position adjustment are terminated, the focus of the lens sets 250 may be adjusted. The wearable device 101 may execute an application for a focus adjustment (e.g., the application for a focus adjustment of FIG. 2) to adjust the focus of the lens sets. The wearable device 101 may adjust a distance between lenses included in each of the lens sets 250, based on executing the application 221 for a focus adjustment. The user may input a user input for designating a distance between lenses at which a screen on the display 220 is most clearly visible, to the wearable device 101. The wearable device 101 may arrange lenses included in each of the lens sets 250, based on a distance between lenses included in each of the lens sets 250 according to the user input.

In operation 409, the wearable device 101 may identify a movement in accordance with a contact. According to an embodiment, the wearable device 101 may identify a movement of the wearable device 101 in accordance with a contact, based on a touch input for a contact greater than or equal to reference extent on a reference area (e.g., an area in which a touch sensor is included in the wearable device 101). However, embodiments of the present disclosure may not be limited thereto. The wearable device 101 may identify a movement of the wearable device 101 in accordance with a touch input through a sensor (e.g., the IMU sensor). Due to the user's movement, a focus of the wearable device 101 may become blurred as time passes. The user may move the wearable device 101 to focus the wearable device 101. The movements of the wearable device 101 in accordance with the contact may be identified through a sensor (e.g., the IMU sensor). As illustrated in FIGS. 3A to 3B, the number of times of movements of the wearable device 101 in accordance with the contact may be identified regardless of a position at which a touch input occurs. For example, the number of times of movements in accordance with a contact in case that a touch input occurs in a strap (e.g., the strap 307 of FIGS. 3A to 3B) may be counted identically to the number of times of movements in accordance with a contact in case that a touch input occurs in a first housing (e.g., the first housing 303 of FIGS. 3A to 3B).

In operation 411, the wearable device 101 may identify an interval between a time point of adjusting a focus of lens sets and a current time point. The wearable device 101 may identify movements in accordance with a plurality of contacts through a sensor (e.g., the IMU sensor).

In operation 413, the wearable device 101 may identify whether the number of times of movement in accordance with the contact during a reference time is identified as greater than a reference number of times. In case that the number of times of movement in accordance with the contact during the reference time is identified as greater than the reference number of times, the wearable device 101 may perform operation 415. In case that the number of times of movement in accordance with the contact during the reference time is identified as less than or equal to the reference number of times, the wearable device 101 may perform operation 417. According to an embodiment, as time passes from a time point of adjusting the focus of the lens sets 250, necessity of a focus adjustment of the lens sets may increase. Therefore, the reference number of times regarding a trigger condition for the focus adjustment of the lens sets 250 may decrease over time from the time point of adjusting the focus. A change in the reference number of times according to the elapsed time after the focus adjustment is described in FIG. 4B below.

In operation 415, the wearable device 101 may adjust the focus of lens sets. The wearable device 101 may adjust a distance between a plurality of lenses included in the lens sets 250 through at least one actuator (e.g., the actuator 260 of FIG. 2). As in operation 407, the wearable device 101 may adjust a distance between a plurality of lenses included in each of the lens sets 250, based on executing the application 221 for the focus adjustment. The user may input a user input for designating a distance between lenses at which a screen on the display 220 is most clearly visible, to the wearable device 101.

In operation 417, the wearable device 101 may maintain the focus of lens sets. The trigger condition for focus adjustment of the plurality of lenses may include identifying the number of times of movement greater than the reference number of times. Since the wearable device 101 does not satisfy the trigger condition, the distance between the plurality of lenses included in the lens sets 250 may not be changed.

Hereinafter, FIG. 4B describes the reference number of times changed over time.

Referring to FIG. 4B, in operation 451, the wearable device 101 may identify an interval between a time point of adjusting the focus of the lens sets and a current time point. The operation 451 may be referred to as the operation 411. According to an embodiment, since necessity of the focus adjustment of the lens sets 250 may increase as time passes from the time point of adjusting the focus of the lens sets 250, the wearable device 101 may identify an interval to identify the reference number of times.

In operation 453, the wearable device 101 may identify whether the identified interval is less than a first time interval. In case that the identified interval is less than the first time interval, the wearable device 101 may perform operation 455. In case that the identified interval is greater than or equal to the first time interval, the wearable device 101 may perform operation 457. The necessity of the focus adjustment of the lens sets 250 in case that the identified interval is less than the first time interval may be less than the necessity of the focus adjustment of the lens sets 250 in case that the identified interval is greater than or equal to the first time interval.

In operation 455, the wearable device 101 may identify whether the number of times of movements in accordance with a contact during a reference time is identified as greater than a first reference number of times. In case that the number of times of movements in accordance with contact during the reference time is identified as greater than the first reference number of times, the wearable device 101 may perform operation 463. In case that the number of times of movements in accordance with contact during the reference time is identified as less than or equal to the first reference number of times, the wearable device 101 may perform operation 465. According to an embodiment, the user may adjust a position of the wearable device 101 due to blurred vision. According to the adjustment of the position of the wearable device 101, the contact between a part of the user's body and the wearable device 101 may be identified. In case that the number of times of movements of the wearable device 101 in accordance with the contact is identified as greater than the first reference number of times, the wearable device 101 may identify blurred vision of the user.

In operation 457, the wearable device 101 may identify whether the identified interval is less than the second time interval greater than the first time interval. In case that the identified interval is less than the second time interval greater than the first time interval, the wearable device 101 may perform operation 459. In case that the identified interval is greater than or equal to a second time interval, the wearable device 101 may perform operation 461. The necessity of the focus adjustment in case that the identified interval is greater than or equal to the first time interval and less than the second time interval greater than the first time interval may be greater than the necessity of the focus adjustment in case that the identified interval is less than the first time interval.

In operation 459, the wearable device 101 may identify whether the number of times of movement in accordance with the contact during the reference time is identified as greater than the second reference number of times less than the first reference number of times. In case that the number of times of movement in accordance with the contact during the reference time is identified as greater than the second reference number of times, the wearable device 101 may perform operation 463. In case that the number of times of movement in accordance with the contact during the reference time is identified as less than or equal to the second reference number of times, the wearable device 101 may perform operation 465. According to an embodiment, as time passes after adjusting the focus of the lens sets, the focus of the wearable device 101 may become blurred. Therefore, the reference number of times included in the trigger condition may be changed according to intervals. For example, the second reference number of times in case that the identified interval is greater than or equal to the first time interval and less than the second time interval may be less than the first reference number of times in case that the identified interval is less than the first time interval.

In operation 461, the wearable device 101 may identify whether the number of times of movement in accordance with the contact during the reference time is identified as greater than a third reference number of times less than the second reference number of times. In case that the number of times of movement in accordance with the contact during the reference time is identified as greater than the third reference number of times, the wearable device 101 may perform operation 463. In case that the number of times of movement in accordance with the contact during the reference time is identified as less than or equal to the third reference number of times, the wearable device 101 may perform operation 465. According to an embodiment, the reference number of times included in the trigger condition may be changed according to intervals. For example, the third reference number of times in case that the identified interval is greater than or equal to the second time interval may be smaller than the second reference number of times in case that the identified interval is less than the second time interval.

In operation 463, the wearable device 101 may adjust a focus of the lens sets. The wearable device 101 may adjust the focus of the lens sets, in order to improve the user's blurred vision. The wearable device 101 may adjust a distance between a plurality of lenses included in each of the lens sets, based on executing the application for focus adjustment (e.g., the application 221 for a focus adjustment of FIG. 2). The user may input a user input for designating a distance between lenses at which a screen on the display is most clearly visible, to the wearable device 101.

In operation 465, the wearable device 101 may maintain the focus of the lens sets. The trigger condition for focus adjustment of a plurality of lenses may include identifying the number of times of the movement greater than the reference number of times. Since the wearable device 101 does not satisfy the trigger condition, the distance between the plurality of lenses included in the lens sets may not be changed.

According to an embodiment, the number of times of the movements of the wearable device 101 in accordance with the contact during the reference time may be referred to as a frequency of the movement of the wearable device 101 in accordance with the contact.

As described above, FIGS. 4A to 4B describe the operation of the wearable device for adjusting the focus of the lens sets based on the number of times of the movement of the wearable device in accordance with the contact. Hereinafter, FIGS. 5A to 5B describe an operation of the wearable device for adjusting a focus of lens sets based on a motion grade of content.

FIGS. 5A to 5B illustrate an example of an operation of a wearable device for adjusting a focus of lens sets based on a motion grade of content according to an embodiment. The wearable device performing operations of FIGS. 5A to 5B may include the wearable device 101 of FIGS. 1 to 3B. The operations of FIGS. 5A to 5B may be performed by a wearable device performing the operations of FIGS. 4A to 4B.

Referring to FIG. 5A, in operation 501, a wearable device (e.g., the wearable device 101 of FIG. 1) may be worn by a user. According to an embodiment, the wearable device 101 may display a virtual space on a display (e.g., the display 220 of FIG. 2), based on executing an application for providing the virtual space. The user may identify an image displayed on the display 220 through lens sets (e.g., the lens set 250 of FIG. 2). According to an embodiment, the user may obtain light emitted from the display through the lens sets 250. The lens sets 250 may refract the light emitted from the display 220 so that the wearable device 101 may provide a virtual reality.

In operation 503, the wearable device 101 may identify whether a designated time has elapsed after a focus adjustment of lens sets. In case that a designated time has elapsed after the focus adjustment of the lens sets 250, the wearable device 101 may perform operation 505. In case that a designated time has not elapsed after the focus adjustment of the lens sets 250, the wearable device 101 may perform operation 503. In case that the designated time has not elapsed after the focus adjustment of the lens sets, a user of the wearable device 100 may change a position of the wearable device 101, in order to increase adhesion between the wearable device 101 and the user. Therefore, in case that a designated time has not elapsed after the focus adjustment of the lens sets 250, the wearable device 101 may not adjust the focus of the lens sets 250 even when a touch input is identified.

In operation 505, the wearable device 101 may identify a motion grade of content included in the screen. According to an embodiment, the wearable device 101 may request the user to input a motion through a graphic on the display 220, based on the content included in the screen. The wearable device 101 may identify a motion grade corresponding to the content according to magnitude and/or a frequency of requested user's motion. For example, the wearable device 101 may display content (e.g., a game requesting user's motion having magnitude greater than or equal to reference magnitude) corresponding to a first motion grade on the display 220. For example, the wearable device 101 may display content (e.g., an application for productivity) corresponding to a second motion grade on the display 220. For example, the wearable device 101 may display content (e.g., a casual game requesting a user's motion having magnitude less than the reference magnitude) corresponding to a third motion grade on the display 220. For example, the wearable device 101 may display content (e.g., movie and/or audiovisual material that do not request user's motion) corresponding to a fourth motion grade on the display 220.

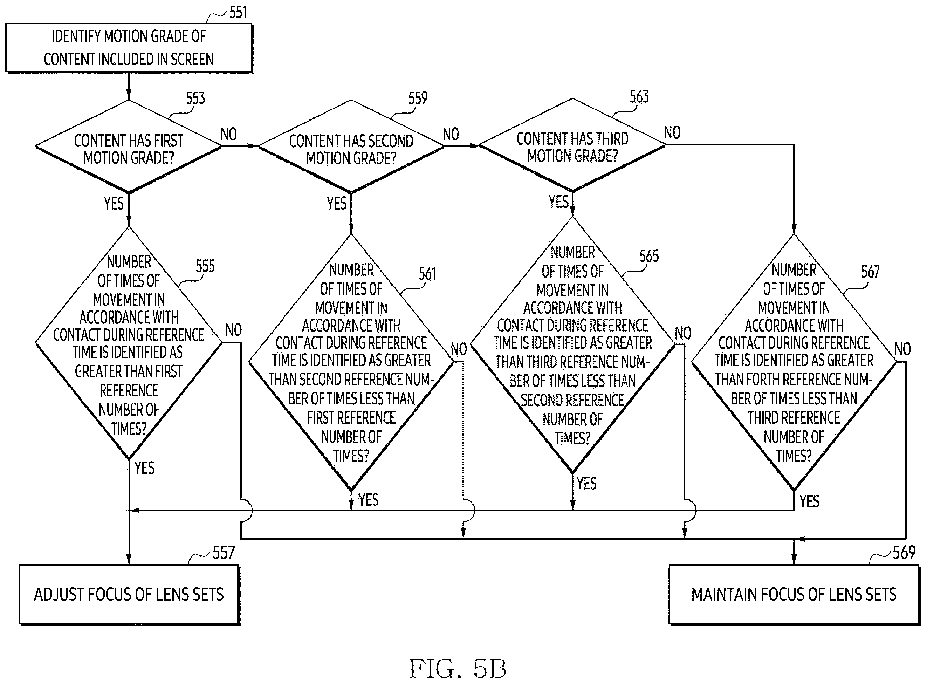

In operation 507, the wearable device 101 may identify whether the number of times of movements in accordance with the contact during the reference time is identified as greater than the reference number of times. In case that the number of times of the movements in accordance with the contact during the reference time is identified as greater than the reference number of times, the wearable device 101 may perform operation 509. In case that the number of times of the movements in accordance with the contact during the reference time is identified as less than or equal to the reference number of times, the wearable device 101 may perform operation 511. According to an embodiment, as magnitude of the motion requested by the content increases, necessity of the focus adjustment of the lens sets 250 may increase. Therefore, the reference number of times regarding a trigger condition for the focus adjustment of the lenses may be designated according to a motion grade corresponding to the content. Hereinafter, FIG. 5B describes a change in the reference number of times according to a motion grade corresponding to the content.

In operation 509, the wearable device 101 may adjust the focus of the lens sets. The wearable device 101 may adjust a distance between a plurality of lenses included in the lens sets 250 through at least one actuator (e.g., the actuator 260 of FIG. 2). The wearable device 101 may adjust a distance between a plurality of lenses included in each of the lens sets 250, based on executing an application for a focus adjustment. The user may input a user input for designating a distance between lenses at which a screen on the display 220 is most clearly visible, to the wearable device 101.

In operation 511, the wearable device 101 may maintain the focus of the lens sets. The trigger condition for the focus adjustment of the plurality of lenses may include identifying the number of times of movement greater than the reference number of times. Since the wearable device 101 does not satisfy the trigger condition, the distance between the plurality of lenses included in the lens sets 250 may not be changed.

Hereinafter, FIG. 5B describes a change in a reference number of times according to a motion grade corresponding to content.

Referring to FIG. 5B, in operation 551, the wearable device 101 may identify a motion grade of content included in a screen. According to an embodiment, the wearable device 101 may identify a motion grade corresponding to the content according to magnitude and/or a frequency of requested user's motion. For example, the wearable device 101 may display content (e.g., a game requesting a user's motion having magnitude greater than or equal to reference magnitude) corresponding to a first motion grade on the display. For example, the wearable device 101 may display content (e.g., an application for productivity) corresponding to a second motion grade on the display 220. For example, the wearable device 101 may display content (e.g., a casual game requesting a user's motion having magnitude less than the reference magnitude) corresponding to a third motion grade on the display 220. For example, the wearable device 101 may display content (e.g., movie, video) corresponding to a fourth motion grade on the display 220. The motion grade may be included in information on a software application including content. The motion grade may be identified based on a type of hardware auxiliary device (e.g., a gun-shaped controller) requested by the software application including the content.

In operation 553, the wearable device 101 may identify whether the content has the first motion grade. In case that content (e.g., a game requesting a user's motion having magnitude greater than or equal to the reference magnitude) has the first motion grade, the wearable device 101 may perform operation 555. In case that the content does not have the first motion grade, the wearable device 101 may perform operation 559. The motion grade information may be included in information on an application provided by a software application.

In operation 555, the wearable device 101 may identify whether the number of times of movement in accordance with contact during a reference time is identified as greater than a first reference number of times. In case that the number of times of the movement in accordance with the contact during the reference time is identified as greater than the first reference number of times, the wearable device 101 may perform operation 557. In case that the number of times of the movement in accordance with the contact during the reference time is identified as less than or equal to the first reference number of times, the wearable device 101 may perform operation 569. According to an embodiment, the user may adjust a position of the wearable device 101 due to blurred vision. According to the adjustment of the position of the wearable device 101, a contact between a part (e.g., hand) of the user's body and the wearable device 101 may be identified. In case that the number of times of the movements of the wearable device 101 in accordance with the contact is identified as greater than the first reference number of times, the wearable device 101 may identify blurred vision of the user.

In operation 559, the wearable device 101 may identify whether content has a second motion grade. In case that content (e.g., an application for productivity) has the second motion grade, the wearable device 101 may perform operation 561. In case that the content does not have the second motion grade, the wearable device 101 may perform operation 563. The magnitude of the user motion requested in the content having the second motion grade may be smaller than the magnitude of the user motion requested in the content having the first motion grade.

In operation 561, the wearable device 101 may identify whether the number of times of movement in accordance with the contact during the reference time is identified as greater than a second reference number of times less than the first reference number of times. In case that the number of times of the movement in accordance with the contact during the reference time is identified as greater than the second reference number of times, the wearable device 101 may perform operation 557. In case that the number of times of the movement in accordance with the contact during the reference time is identified as less than or equal to the second reference number of times, the wearable device 101 may perform operation 569. According to an embodiment, a position of the wearable device 101 may be changed according to the user's motion requested from the content. The reference number of times included in the trigger condition may be changed according to the magnitude of the user's motion requested by the content. For example, the second reference number of times in which magnitude of the requested user's motion corresponds to content having relatively small magnitude may be smaller than the first reference number of times in which magnitude of the user's motion corresponds to content having a relatively large magnitude.

In operation 563, the wearable device 101 may identify whether the content has a third motion grade. In case that content (e.g., a casual game requesting a user's motion having magnitude less than reference magnitude) has a third motion grade, the wearable device 101 may perform operation 565. In case that the content does not have a third motion grade, the wearable device 101 may perform operation 567. The magnitude of the user motion requested in the content having the third motion grade may be smaller than the magnitude of the user motion requested in the content having the second motion grade.

In operation 565, the wearable device 101 may identify whether the number of times of movement in accordance with a contact during a reference time is identified as greater than a third reference number of times less than the second reference number of times. In case that the number of times of the movement in accordance with the contact during the reference time is identified as greater than the third reference number of times , the wearable device 101 may perform operation 557. In case that the number of times of the movement in accordance with the contact during the reference time is identified as less than or equal to the third reference number of times , the wearable device 101 may perform operation 569. According to an embodiment, the reference number of times included in the trigger condition may be changed according to the magnitude of the user's motion requested by the content. For example, the third reference number of times in which magnitude of the requested user's motion corresponds to content having relatively small magnitude may be greater than the second reference number of times in which magnitude of the user's motion corresponds to content having a relatively large magnitude.

In operation 567, the wearable device 101 may identify whether the number of times of movement in accordance with the contact during the reference time is identified as greater than a fourth reference number of times less than the third reference number of times. In case that the number of times of the movement in accordance with the contact during the reference time is identified as greater than the fourth reference number of times, the wearable device 101 may perform operation 557. In case that the number of times of the movement in accordance with the contact during the reference time is identified as less than or equal to the fourth reference number of times, the wearable device 101 may perform operation 569. As a precondition for performing the operation 567, the wearable device 101 may identify whether a content (e.g., a movie and/or audiovisual material that does not request a user's motion) has the fourth motion grade rather than a third motion grade. The magnitude of the user motion requested in the content having the fourth motion grade may be smaller than the magnitude of the user motion requested in the content having the third motion grade. According to an embodiment, the reference number of times included in the trigger condition may be changed according to the magnitude of the user's motion requested by the content. For example, the fourth reference number of times in which magnitude of the requested user's motion corresponds to content having relatively small magnitude may be smaller than the third reference number of times in which magnitude of the user's motion corresponds to content having a relatively large magnitude.

In operation 557, the wearable device 101 may adjust a focus of lens sets. The wearable device 101 may adjust the focus of the lens sets 250, in order to improve the user's blurred vision. The wearable device 101 may adjust a distance between a plurality of lenses included in each of the lens sets 250, based on executing the application for focus adjustment (e.g., the application 221 for focus adjustment of FIG. 2). The user may input a user input for designating a distance between lenses at which a screen on the display is most clearly visible, to the wearable device 101.

In operation 569, the wearable device 101 may maintain the focus of the lenses. The trigger condition for focus adjustment of a plurality of lenses may include identifying the number of times of the movement greater than the reference number of times. Since the wearable device 101 does not satisfy the trigger condition, the distance between the plurality of lenses included in the lens sets 250 may not be changed.

According to an embodiment, the number of times of the movements of the wearable device 101 in accordance with the contact during the reference time may be referred to as a frequency of the movement of the wearable device 101 in accordance with the contact.

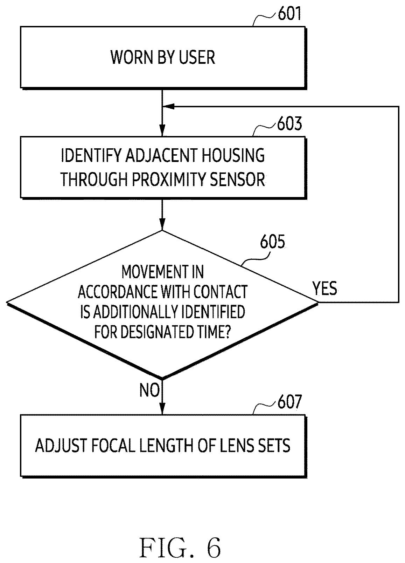

FIG. 6 illustrates an example of an operation of an electronic device for adjusting a focus of lens sets after wearing a wearable device according to an embodiment. A wearable device performing an operation of FIG. 6 may include the wearable device 101 of FIGS. 1 to 3B. The operation of FIG. 6 may be performed by a wearable device performing the operation of FIGS. 4A to 5B.

Referring to FIG. 6, in operation 601, a wearable device (e.g., the wearable device 101 of FIG. 1) may be worn by a user. According to an embodiment, when the wearable device 101 is worn on the user, a first surface 151 of the first housing (e.g., the first housing 303 of FIGS. 3A to 3B) and a third surface 153 of the second housing (e.g., the second housing 305 of FIGS. 3A to 3B) may face a part (e.g., face and/or head) of the user's body.

In operation 603, the wearable device 101 may identify an adjacent housing through a proximity sensor. The wearable device 101 may identify the first housing 303 adjacent to a part (e.g., face) of the user's body through the proximity sensor. The wearable device 101 may identify the second housing 305 adjacent to a part (e.g., head) of the user's body through the proximity sensor.

In operation 605, the wearable device 101 may identify whether a movement in accordance with a contact is additionally identified for a designated time. In case that the movement in accordance with the contact is additionally identified for the designated time, the wearable device 101 may perform operation 603. In case that the movement in accordance with the contact is not additionally identified for the designated time, the wearable device 101 may perform operation 607. According to an embodiment, this is because when the movement in accordance with the contact is not additionally identified for the designated time, it may be identified that the additional position adjustment for the wearable device 101 has been terminated.

In operation 607, the wearable device 101 may adjust a focus of lens sets. The user may identify an image displayed on a display (e.g., the display 220 of FIG. 2) through lens sets (e.g., the lens set 250 of FIG. 2). According to an embodiment, the user may obtain light emitted from the display 220 through the lens sets 250. The lens sets 250 may refract the light emitted from the display 220 so that the wearable device 101 may provide a virtual reality. The wearable device 101 may adjust a distance between a plurality of lenses included in the lens sets 250 through at least one actuator (e.g., the actuator 260 of FIG. 2). The wearable device 101 may adjust the distance between the plurality of lenses included in each of the lens sets 250, based on executing the application for focus adjustment. The user may input a user input for designating a distance between lenses at which a screen on the display 220 is most clearly visible, to the wearable device 101.

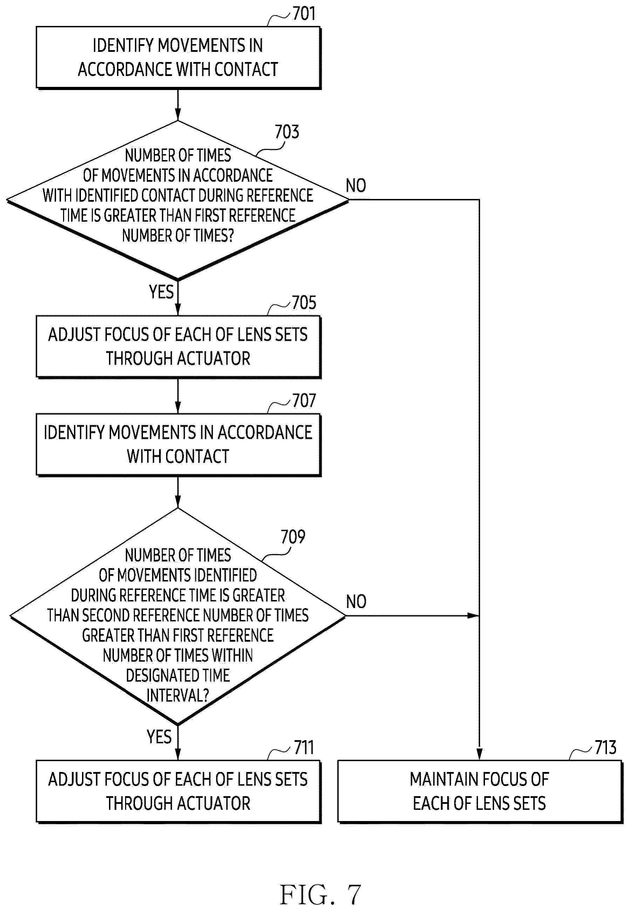

FIG. 7 illustrates an example of an operation of a wearable device for adjusting a focus within a designated time interval after adjusting a focus, according to an embodiment. An operation of FIG. 7 may be performed by the wearable device 101 of FIGS. 1 to 3B. The operation of FIG. 7 may be performed by a wearable device performing the operations of FIGS. 4A to 6.

Referring to FIG. 7, in operation 701, a wearable device (e.g., the wearable device 101 of FIG. 1) may identify movements in accordance with a contact. According to an embodiment, the wearable device 101 may identify the movement of the wearable device 101 in accordance with the contact, based on a touch input for a contact greater than or equal to reference extent on a reference area (e.g., an area in which a touch sensor is included in the wearable device 101). However, embodiments of the present disclosure may not be limited thereto. The wearable device 101 may identify the movement of the wearable device 101 in accordance with a touch input through a sensor (e.g., touch sensor or IMU sensor). Due to the user's movement, the focus of the wearable device 101 may become blurred over time. The user may move the wearable device 101 to focus the wearable device 101. The movements of the wearable device 101 in accordance with the contact may be identified through a sensor (e.g., the IMU sensor).

In operation 703, the wearable device 101 may identify whether the number of times of movements in accordance with identified contact during a reference time is greater than a first reference number of times. In case that the number of times of the movements in accordance with the identified contact during the reference time is greater than the first reference number of times, the wearable device 101 may perform operation 705. In case that the number of times of the movements in accordance with the identified contact during the reference time is not greater than the first reference number of times, the wearable device 101 may perform operation 713. The number of times of the movements of the wearable device 101 in accordance with the identified contact during the reference time may be referred to as a frequency of the movement of the wearable device 101 in accordance with the contact. The number of times of the movements in accordance with the contact may be counted regardless of a position (e.g., a portion of the first housing, a portion of the second housing, or a portion of a strap) at which a touch input occurs.

In operation 705, the wearable device 101 may adjust a focus of each of lens sets through an actuator. The wearable device 101 may adjust a distance between a plurality of lenses included in each of the lens sets (e.g., the lens set 250 of FIG. 2), based on executing the application for focus adjustment. The user may input a user input for designating a distance between lenses at which a screen on the display (e.g., the display 220 of FIG. 2) is most clearly visible, to the wearable device 101.

In operation 707, the wearable device 101 may identify the movements in accordance with the contact. The wearable device 101 may identify the movements of the wearable device 101 in accordance with the contact even after adjusting the focus of each of the lens sets. This is because even after focus adjustment, the focus may become blurred over time.

In operation 709, the wearable device 101 may identify whether the number of times of movements identified during a reference time is greater than a second reference number of times greater than the first reference number of times within a designated time interval. According to an embodiment, as time passes after adjusting the focus of the lens sets, the focus of the wearable device 101 may become blurred. Therefore, the reference number of times included in the trigger condition may be changed according to intervals. After the focus of the lens sets is adjusted, the second reference number of times included in the trigger condition within the designated time interval may be greater than the first reference number of times included in the trigger condition after the designated time interval.

In operation 711, the wearable device 101 may adjust the focus of each of the lens sets through the actuator. The wearable device 101 may adjust the focus of the lens sets 250, in order to improve the user's blurred vision. As shown in operation 705, based on the wearable device 101 executing an application for focus adjustment, the user may input a user input for designating a distance between a plurality of lenses included in each of the lens sets 250 in which a screen on the display 220 is most clearly visible, to the wearable device 101.

In operation 713, the wearable device 101 may maintain the focus of each of the lens sets. Since the wearable device 101 does not satisfy the trigger condition, the distance between the plurality of lenses included in the lens sets may not be changed.

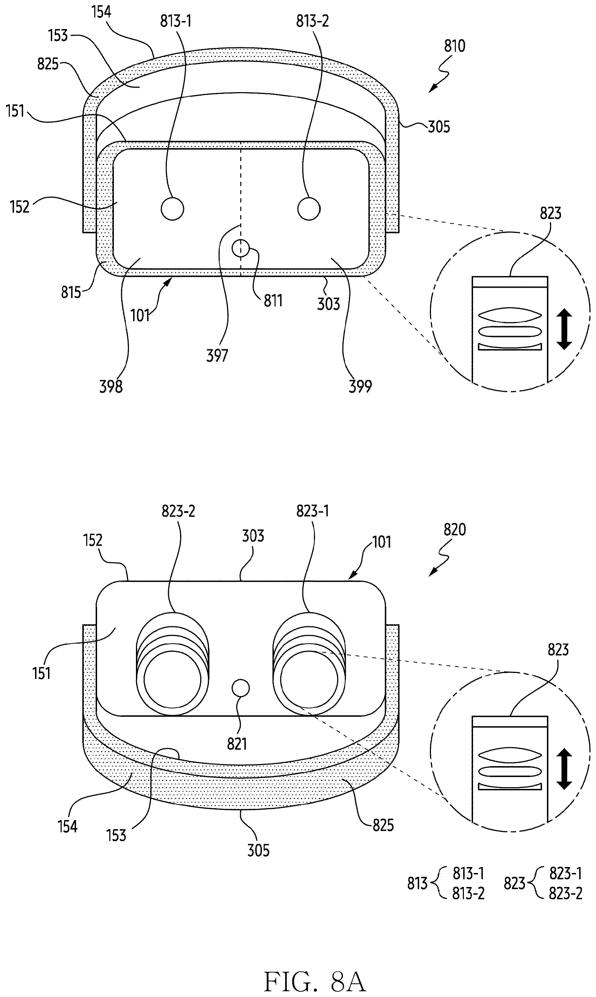

FIGS. 8A to 8C illustrate a position of a sensor included in a wearable device according to an embodiment. A wearable device 101 of FIGS. 8A to 8C may include the wearable device 101 of FIGS. 1 to 3B. The wearable device 101 of FIGS. 8A to 8C may include a wearable device performing the operation of FIGS. 4A to 7. A camera 813 included in the wearable device 101 may be a red-green-blue (RGB) camera for obtaining an external image. A depth sensor 811 included in the wearable device 101 may be a camera for identifying a depth of an external environment.

Referring to FIG. 8A, in a state 810 to a state 820, the wearable device 101 may include a first housing 303 and a second housing 305. The first housing 303 may include a camera 813 (e.g., a first camera 813-1, a second camera 813-2), a depth sensor 811, a moving flange 823, (e.g., a first moving flange 823-1, a second moving flange 823-2), and/or a touch sensor 815. The second housing 305 may include a touch sensor 825.

According to an embodiment, a second surface 152 of the first housing 303 of the wearable device (e.g., the wearable device 101 of FIG. 1) may be illustrated in the state 810. For example, when the user wears the wearable device 101, the second surface 152 may be spaced apart from and opposite to the first surface 151 of the first housing 303 facing a part (e.g., face) of the user's body. The wearable device 101 may include the touch sensor 815 surrounding an edge portion of the first housing 303. The wearable device 101 may receive a touch input through the touch sensor 815. The wearable device 101 may adjust a focus to a lens set included in the moving flange 823 by changing a distance between a plurality of lenses included in the moving flange 823, based on a touch input received through the touch sensor 815.

According to an embodiment, the first surface 151 of the first housing 303 including a display (e.g., the display 220 of FIG. 2) may be illustrated in the state 820. A fourth surface of the second housing 305 opposite to the third surface 153 of the second housing 305 may be illustrated. For example, when the user wears the wearable device 101, the fourth surface 154 may be spaced apart from and opposite to the third surface 153 of the second housing 305 facing the user. The wearable device 101 may include the touch sensor 825 on the fourth surface 154 of the second housing 305. The wearable device 101 may receive a touch input through the touch sensor 825. The wearable device 101 may adjust a focus to a lens set included in the moving flange 823 by changing a distance between a plurality of lenses included in the moving flange 823, based on a touch input received through the touch sensor 825.

Although not illustrated in FIG. 8A, the wearable device 101 may include a strap (e.g., the strap 307 of FIGS. 3A to 3B) connecting the first housing 303 and/or the second housing 305. The strap 307 may be connected to or disconnected from the first housing 303 and/or the second housing 305. The strap 307 may include a fifth surface 155 and a sixth surface 156 opposite to the fifth surface 155. When the user wears the wearable device 101, the strap 307 may include a touch sensor on a sixth surface 156, which is opposite to the fifth surface 155 of the strap 307 facing the user. The wearable device 101 may receive a touch input through a touch sensor included in the strap 307. The wearable device 101 may adjust a focus to a lens set included in the moving flange 823 by changing a distance between a plurality of lenses included in the moving flange 823, based on a touch input received through the touch sensor included in the strap 307.

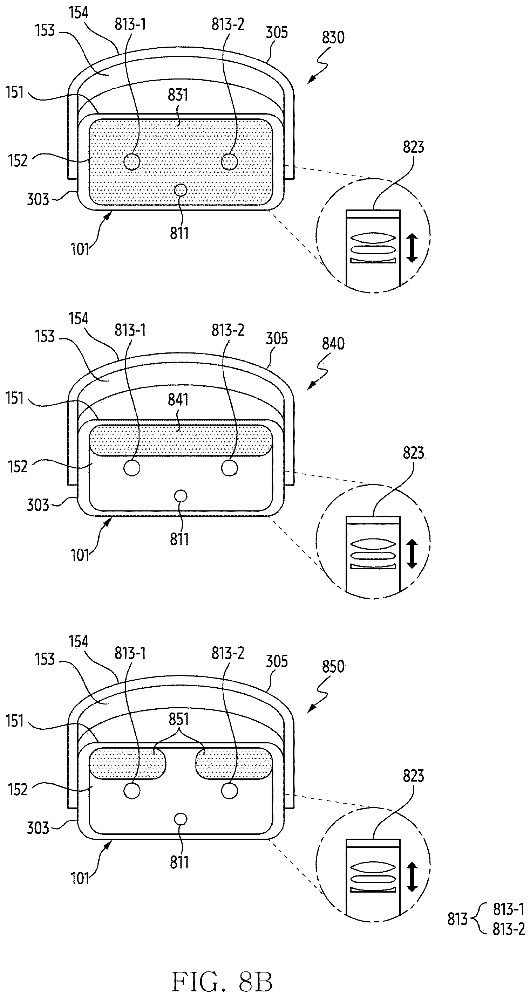

Referring to FIG. 8B, in a state 830 to a state 850, the wearable device 101 may include a first housing 303 and a second housing 305. The first housing 303 may include a camera 813, a depth sensor 811, a moving flange 823, a touch sensor 831, a touch sensor 841, and/or a touch sensors 851.

According to an embodiment, a second surface 152 opposite to the first surface 151 including a display (e.g., the display 220 of FIG. 2) of the first housing 303 of the wearable device 101 may be illustrated in the state 830. The wearable device 101 may include the touch sensor 831 on the entire second surface 152 of the first housing 303. The wearable device 101 may receive a touch input through the touch sensor 831. The wearable device 101 may adjust a focus to a lens set included in the moving flange 823 by changing a distance between a plurality of lenses included in the moving flange 823, based on a touch input received through the touch sensor 831.

According to an embodiment, the second surface 152 of the first housing 303 of the wearable device 101 may be illustrated in the state 840. The wearable device 101 may include the touch sensor 841 in a portion of the second surface 152 of the first housing 303. The wearable device 101 may adjust a focus to a lens set included in the moving flange 823 by changing a distance between a plurality of lenses included in the moving flange 823, based on a touch input received through the touch sensor 841.

According to an embodiment, the second surface 152 of the first housing 303 of the wearable device 101 may be illustrated in the state 850. The wearable device 101 may include a plurality of touch sensors 851 in a portion of the second surface 152 of the first housing 303. The wearable device 101 may adjust a focus to a lens set included in the moving flange 823 by changing a distance between a plurality of lenses included in the moving flange 823, based on a touch input received through the touch sensor 851.

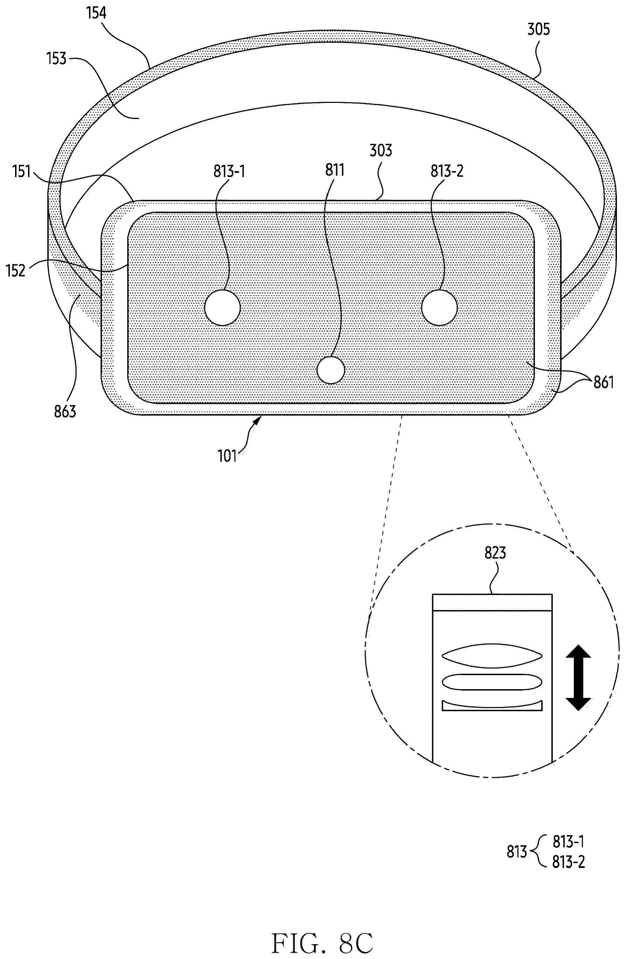

Referring to FIG. 8C, the wearable device 101 may include a touch sensor in a first housing and/or a second housing. According to an embodiment, the wearable device 101 may include a first housing 303 and a second housing 305. The first housing 303 may include a camera 813, a depth sensor 811, a moving flange 823, and a touch sensor 861. The second housing 305 may include a touch sensor 863. According to an embodiment, the touch sensor 861 may be disposed on the entire portion and an edge portion of the second surface 152 of the first housing 303. According to an embodiment, the touch sensor 863 may be disposed in a first portion (e.g., the first portion 399) of the second housing 305. The wearable device 101 may adjust a focus to a lens set included in the moving flange 823 by changing a distance between a plurality of lenses included in the moving flange 823, based on a touch input received through the plurality of touch sensors (e.g., the touch sensor 861 and the touch sensor 863).

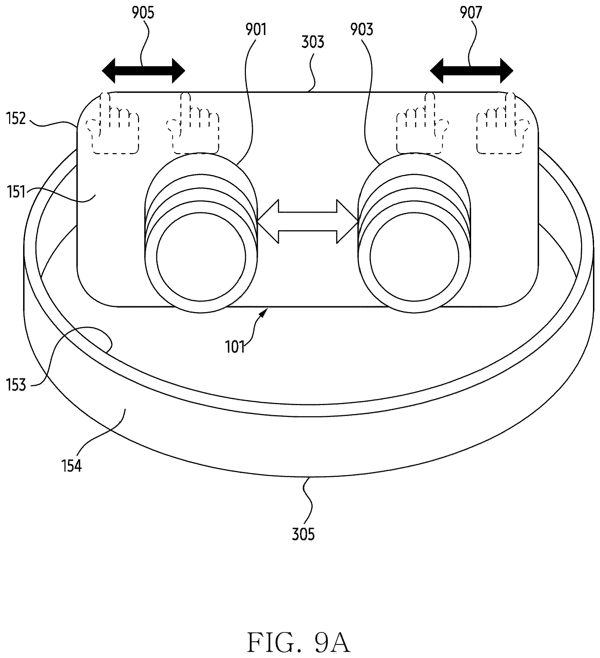

FIG. 9A illustrates an example of a wearable device in which a distance between lens sets is changed based on a touch input (e.g., a drag or swipe input) identified in a first housing, according to an embodiment. A wearable device 101 of FIG. 9A may include the wearable device 101 of FIGS. 1 to 3B. The wearable device 101 of FIG. 9A may perform operations of FIGS. 4A to 7. The wearable device 101 of FIG. 9A may include the wearable device 101 of FIGS. 8A to 8C.

Referring to FIG. 9A, the wearable device 101 may include a first housing 303 and a second housing 305. The first housing 303 may include a first moving flange 901 and a second moving flange 903. The wearable device 101 may identify a touch input (e.g., a drag input 905 and/or a drag input 907) with respect to the first housing 303 through a touch sensor.

According to an embodiment, the first housing 303 of the wearable device 101 may include a first surface 151 including a display (e.g., the display 220 of FIG. 2) and a second surface 152 spaced apart from and opposite the first surface 151. The wearable device 101 may identify the drag input 905 and/or the drag input 907 through a touch sensor disposed on the second surface 152.

According to an embodiment, the wearable device 101 may change a distance between the first moving flange 901 and the second moving flange 903 according to a touch input (the drag input 905 and/or the drag input 907). For example, the wearable device 101 may adjust the distance between the first moving flange 901 and the second moving flange 903 by adjusting a position of the first moving flange 901, based on identifying the drag input 905. For example, the wearable device 101 may adjust the distance between the first moving flange 901 and the second moving flange 903 by adjusting a position of the second moving flange 903, based on identifying the drag input 907.

According to an embodiment, in case that a movement (e.g., movement in accordance with the drag input 905) in accordance with a contact with respect to a first portion (e.g., a portion corresponding to a left eye when the user wears, the portion 399) based on a center line of the second surface 152 of the first housing 303 is identified, the wearable device 101 may adjust a distance between the lens sets (e.g., a lens set included in the first moving flange 901 and a lens set included in the second moving flange 903), by changing a position of the lens set (e.g., the lens set included in the first moving flange 901) corresponding to the first portion. In case that the movement (e.g., the movement according to the drag input 907) in accordance with the contact with respect to the second portion (e.g., a portion corresponding to a right eye when the user wears, the second portion 398) different from the first portion based on the center line of the second surface 152 of the first housing 303 is identified, the wearable device 101 may adjust a distance between the lens sets, by changing a position of the lens set (e.g., the lens set included in the second moving flange 903) corresponding to the second portion.

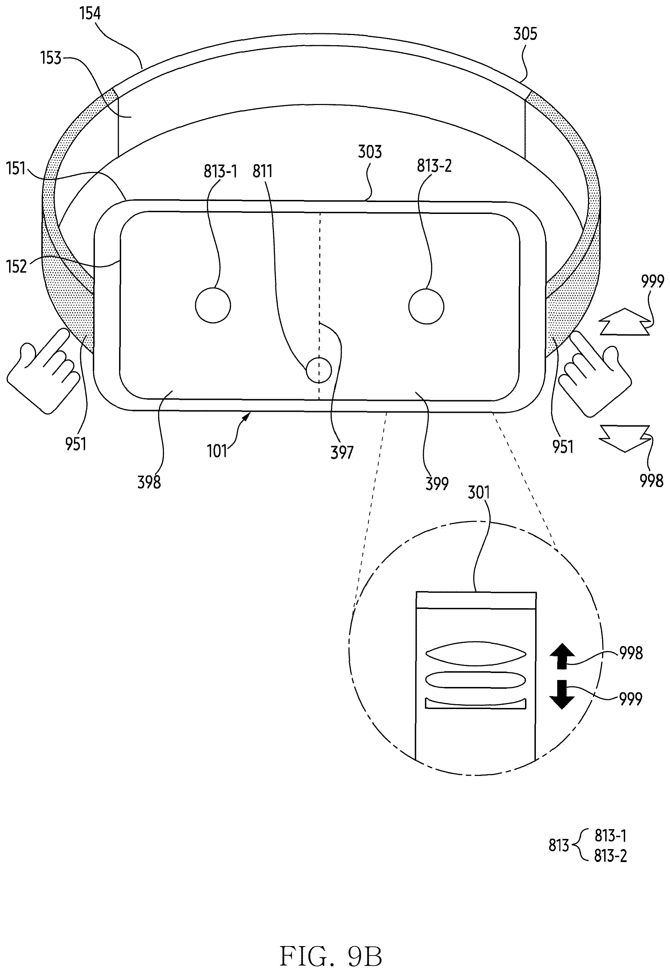

FIG. 9B illustrates an example of a wearable device in which a focus of lens sets is changed based on a touch input (e.g., drag or swipe input) identified in a second housing, according to an embodiment. A wearable device 101 of FIG. 9B may include the wearable device 101 of FIGS. 1 to 3B. The wearable device 101 of FIG. 9B may perform operations of FIGS. 4A to 7. The wearable device 101 of FIG. 9B may include the wearable device 101 of FIGS. 8A to 9A.

Referring to FIG. 9B, the wearable device 101 may include a first housing 303 and a second housing 305. The first housing 303 may include a camera 813 and a depth sensor 811. The second housing 305 may include a touch sensor 951. The first housing 303 may include a moving flange 301. The camera 813 included in the wearable device 101 may be a red-green-blue (RGB) camera for obtaining an external image. The depth sensor 811 included in the wearable device 101 may be a camera for identifying a depth of an external environment.

According to an embodiment, the wearable device 101 may identify a touch input (e.g., a drag or swipe input) with respect to the touch sensor 951 included in the second housing 305. According to an embodiment, the wearable device 101 may change a distance between a plurality of lenses (e.g., a plurality of lenses included in the moving flange 301) included in the lens sets according to a direction of the identified drag input. For example, when a drag input is identified through the touch sensor 951 in a direction 998 toward the first housing 303, the wearable device 101 may reduce the distance between the plurality of lenses through at least one actuator. For example, when the drag input is identified through the touch sensor 951 in a direction 999 opposite to a direction toward the first housing 303, the wearable device 101 may increase the distance between the plurality of lenses through at least one actuator.

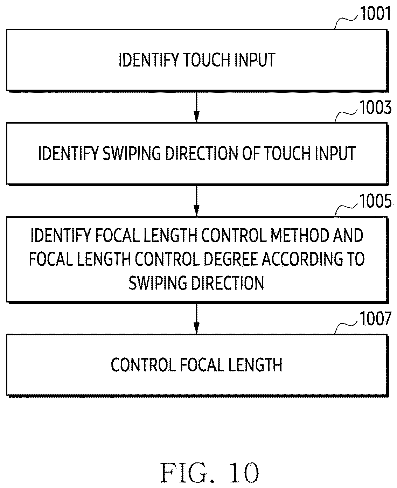

FIG. 10 illustrates an example of an operation of a wearable device in which a focus is changed based on a drag input, according to an embodiment. An operation of FIG. 10 may be performed by the wearable device 101 of FIGS. 1 to 3B. The operation of FIG. 10 may be performed by a wearable device performing the operations of FIGS. 4A to 7. The operation of FIG. 10 may be performed by the wearable device 101 of FIGS. 8A to 9A.

Referring to FIG. 10, in operation 1001, a wearable device (e.g., the wearable device 101 of FIG. 1) may identify a touch input. The wearable device 101 may identify a touch input through a touch sensor included in a second housing (e.g., the second housing 305 of FIGS. 3A to 3B). The touch input may include a drag or swipe input.

In operation 1003, the wearable device 101 may identify a swiping direction of the touch input. The swiping direction may include a direction toward the first housing 303 or a direction away from the first housing 303.

In operation 1005, the wearable device 101 may identify a focal length control method and a focal length control degree according to a swiping direction. For example, the focal length control method may be a first method of reducing a distance of a plurality of lenses included in the lens set or a second method of increasing the distance. The wearable device 101 may identify whether to reduce the distance of the plurality of lenses included in the lens set according to the swiping direction. As an example, the wearable device 101 may identify a first method as the focal length control method, based on identifying the swiping direction as a direction facing the first housing 303. As an example, the wearable device 101 may identify a second method as the focal length control method, based on identifying the swiping direction as a direction opposite to the direction facing the first housing 303. The focal length control degree may indicate a degree to which the distance of the plurality of lenses is decreases according to the first method or increases according to the second method. For example, the wearable device 101 may determine a degree to which the distance of the plurality of lenses included in the lens set is changed according to the degree of swiping.

In operation 1007, the wearable device 101 may control a focal length. The wearable device 101 may control a focal length of the lens set by changing the distance between the plurality of lenses. As an example, the wearable device 101 may reduce the distance of the plurality of lenses through at least one actuator, based on identifying a swiping direction as a direction facing the first housing 303. The wearable device 101 may reduce the distance between the plurality of lenses by a distance according to the degree of swiping. As an example, the wearable device 101 may increase the distance of the plurality of lenses through at least one actuator, based on identifying the swiping direction as a direction opposite to the direction facing the first housing 303. The wearable device 101 may increase the distance of the plurality of lenses by the distance according to the degree of swiping. The wearable device 101 may adjust a distance between lenses included in each of the lens sets, based on executing an application (e.g., the application 221 for focal length adjustment of FIG. 2) for focal length adjustment to adjust the focus of lens sets. The user may input a user input for designating a distance between lenses at which a screen on the display is most clearly visible, to the wearable device 101. The wearable device 101 may arrange lenses included in each of the lens sets based on the distance between the lenses included in each of the lens sets according to the user input.

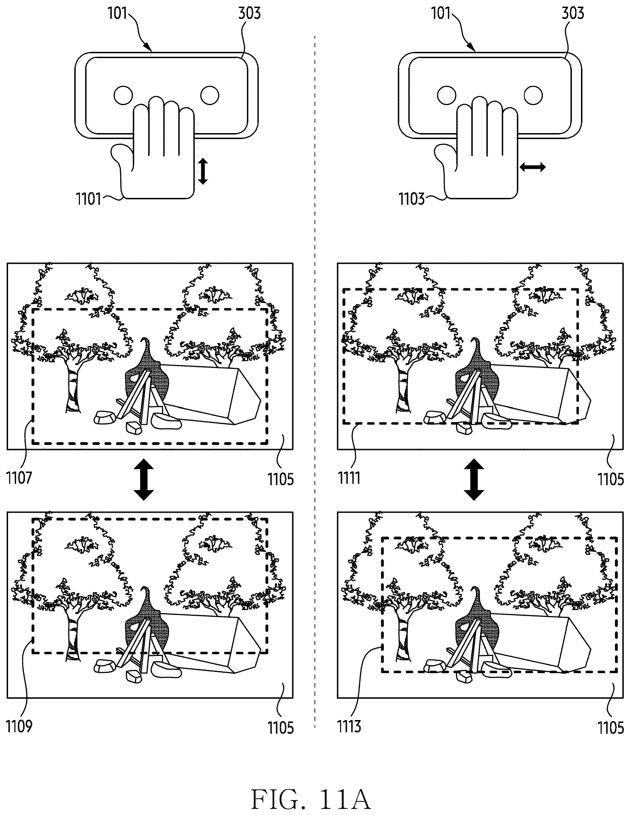

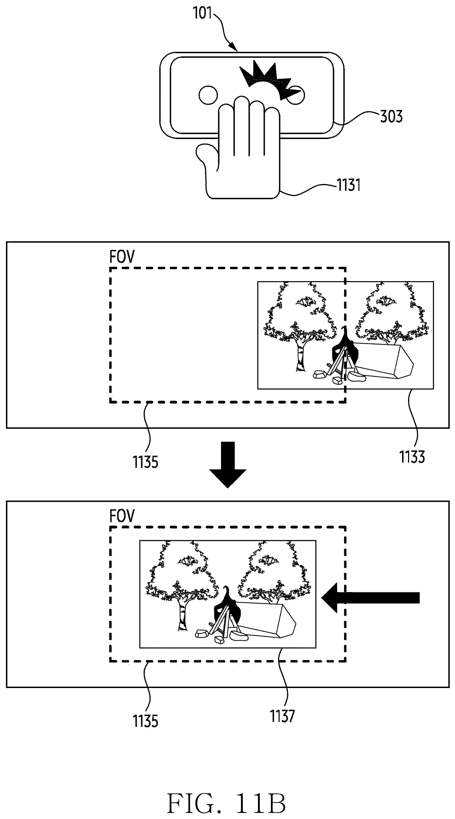

FIGS. 11A to 11B illustrate an example of a wearable device in which a position of an image representing a virtual space is changed based on a touch input, according to an embodiment. A wearable device 101 of FIGS. 11A and 11B may include the wearable device 101 of FIGS. 1 to 3B. The wearable device 101 of FIGS. 11A and 11B may include a wearable device performing the operation of FIGS. 4A to 7 and/or 10. The wearable device 101 of FIGS. 11A and 11B may include the wearable device 101 of FIGS. 8A to 9A.

Referring to FIG. 11A, the wearable device 101 may include a first housing 303. The wearable device 101 may identify a user's touch input (e.g., a drag input 1101 and a drag input 1103) with respect to the first housing 303 through a sensor. A virtual space image 1105 may represent a virtual space provided by a software application. A field of view (FoV) area (e.g., a FoV area 1107, a FoV area 1109, a FoV area 1111, and/or a FoV area 1113) may be an area within the virtual space image 1105 displayed on a display.

According to an embodiment, the drag input 1101 with respect to the first housing 303 may be obtained with respect to a first direction. The wearable device 101 may change a FoV area (e.g., the FoV area 1107 and the FoV area 1109) on the virtual space image 1105 according to the drag input 1101. For example, the wearable device 101 may change the FoV area 1107 to the FoV area 1109 or change the FoV area 1109 to the FoV area 1107, based on the first direction of the drag input 1101.

According to an embodiment, the drag input 1103 with respect to the first housing 303 may be obtained with respect to a second direction perpendicular to the first direction. The wearable device 101 may change a FoV area (e.g., the FoV area 1111 and the FoV area 1113) on the virtual space image 1105 according to the drag input 1103. For example, the wearable device 101 may change the FoV area 1111 to the FoV area 1113 or change the FoV area 1113 to the FoV area 1111 based on the second direction of the drag input 1103.

As described above, the wearable device 101 may improve user convenience by changing the FoV area, according to a direction of the drag input with respect to the first housing.

Referring to FIG. 11B, the wearable device 101 may include a first housing 303. The wearable device 101 may identify a user's touch input 1131 with respect to the first housing 303. A virtual space image (e.g., a virtual space image 1133 and a virtual space image 1137) may represent a virtual space provided by a software application. The FoV area 1135 may be an area appearing on a screen displayed on a display.

According to an embodiment, the touch input 1131 may include a tapping input. The tapping input may include a plurality of touch inputs. The touch input 1131 may include drag, pinch-to-zoom, spread, swipe, single tap, double tap, and/or flick. However, it may not be limited thereto. The wearable device 101 may display the virtual space image 1133 through the display so that the FoV area 1135 is included, based on the touch input 1131 by the user. The virtual space image 1133 may be displayed in a position of the virtual space image 1137 based on the touch input 1131.

As described above, the user may improve user convenience by controlling the display so that the virtual space images 1133 and 1137 are included in the FoV area 1135, based on the touch input 1131.

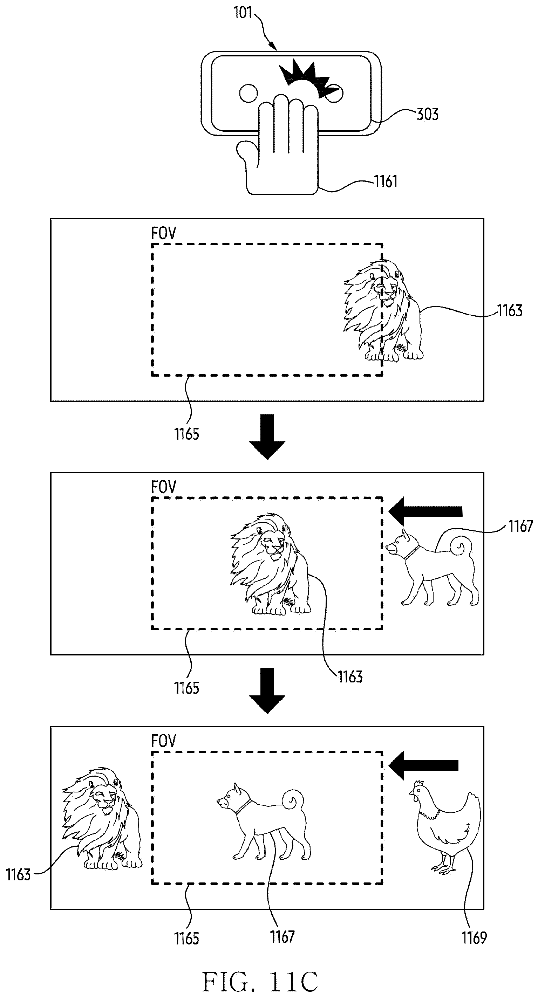

FIG. 11C illustrates an example of a wearable device in which a virtual object included in a virtual space displayed based on a touch input is changed according to an embodiment. A wearable device 101 of FIG. 11C may include the wearable device 101 of FIGS. 1 to 3B and 11A to 11B. The wearable device 101 of FIG. 11C may include a wearable device performing the operation of FIGS. 4A to 7 and/or 10. The wearable device 101 of FIG. 11C may include the wearable device 101 of FIGS. 8A to 9A.

Referring to FIG. 11C, the wearable device 101 may include a first housing 303. The wearable device 101 may identify a user's touch input 1161 with respect to the first housing 303. A virtual space image may represent a virtual space provided by a software application. The virtual space image may include a first object 1163, a second object 1167, and a third object 1169. The FoV area 1165 may be an area appearing on a screen displayed on the display.

According to an embodiment, the wearable device 101 may identify a virtual object (e.g., a first object 1163, a second object 1167, and a third object 1169) of high importance included in the virtual space image. The importance may be identified according to a frequency of interaction with the user. For example, the importance of an object that interacts with the user of the wearable device 101 may be set higher than the importance of an object that does not interact with the user of the wearable device 101. For another example, the importance of an object having three interactions with the user of the wearable device 101 may be set higher than the importance of an object having two interactions with the user of the wearable device 101. According to another embodiment, the virtual object having the high importance may be individually set in an application. For example, the virtual object may be pre-set by an operator or set by a user's operation within a screen of a game application. For example, the virtual object may be an object having the largest area among a plurality of objects in the virtual space of the application.

According to an embodiment, the touch input 1161 may include a tapping input. The touch input 1161 may include a plurality of touch inputs. The wearable device 101 may display a portion of the first object 1163 on the display. A portion of the first object 1163 may be included in the FoV area 1165.

When the first object 1163 is identified as an object of high importance, based on the user's touch input 1161, the wearable device 101 may display the first object 1163 on the display so that the first object 1163 is included in a center of the FoV area 1165. When a plurality of objects (e.g., the first object 1163, the second object 1167, and the third object 1169) of high importance are identified, based on the user's touch input 1161, the wearable device 101 may sequentially display objects of high importance in the center of the FoV area 1165. For example, based on the user's touch input 1161, the wearable device 101 may display on the display so that the second object 1167 is included in the center of the FoV area 1165.

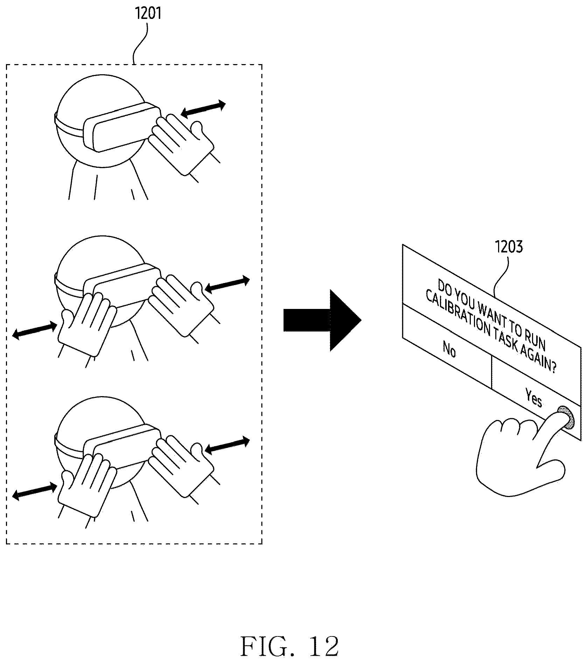

FIG. 12 illustrates an example of a wearable device executing a software application for a focus change based on a touch input (e.g., a drag input), according to an embodiment. A wearable device described with reference to FIG. 12 may include the wearable device 101 of FIGS. 1 to 3B. The wearable device described with reference to FIG. 12 may include a wearable device performing the operation of FIGS. 4A to 7 and/or 10. The wearable device described with reference to FIG. 12 may include the wearable device 101 of FIGS. 8A to 9A and 11A to 11C.

Referring to FIG. 12, in operation 1201, a wearable device (e.g., the wearable device 101 of FIG. 1) may obtain an input for executing a software application.

According to an embodiment, an input obtained in the operation 1201 may be a touch input (e.g., a drag input) with respect to the wearable device 101. For example, the touch input may be generated by a user's gesture of rubbing left and right. The gesture causing the touch input may be similar to a user's motion when the field of view is blurred.

According to an embodiment, a screen 1203 may be displayed on the display of the wearable device 101 to execute a software application. The wearable device 101 may display a notification for identifying whether to execute a software application on the screen 1203.

According to an embodiment, the software application may be executed to change information related to the field of view. For example, the wearable device 101 may display a notification displayed on the screen 1203, in order to identify whether to execute a calibration application for increasing accuracy of gaze tracking. The wearable device 101 may display a virtual object for tracking the user's gaze on the display, based on executing a calibration application for increasing the accuracy of gaze tracking. The wearable device 101 may track user's pupil based on executing the calibration application. The wearable device 101 may increase the accuracy of the user's gaze tracking, by comparing a movement path of the user's pupil with a movement path of a virtual object.

For example, the wearable device 101 may display a notification displayed on the screen 1203 to identify whether to execute an application for focus adjustment. The wearable device 101 may change a focus of lens set included in the wearable device 101 by controlling a distance between lenses included in the lens set through at least one actuator, based on executing the application for focus adjustment. For example, the designated condition may be whether a movement of the wearable device 101 in accordance with a contact is identified as greater than a reference number of times during a reference time.

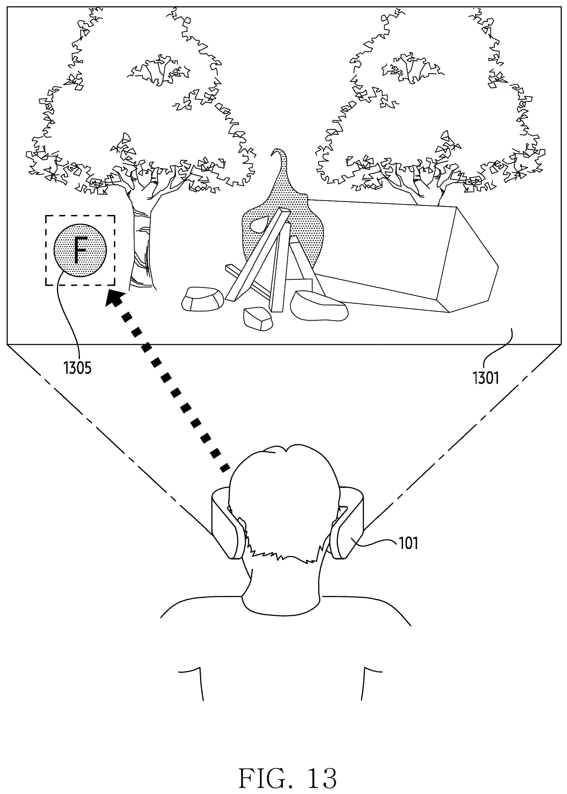

FIG. 13 illustrates an example of a wearable device for identifying an input for performing a focus change through a gaze tracking, according to an embodiment. A wearable device 101 of FIG. 13 may include the wearable device 101 of FIGS. 1 to 3B. The wearable device 101 of FIG. 13 may include a wearable device performing the operation of FIGS. 4A to 7 and/or 10. The wearable device 101 of FIG. 13 may include the wearable device 101 of FIGS. 8A to 9A and 11A to 11C. The wearable device 101 of FIG. 13 may include the wearable device described with reference to FIG. 12.

Referring to FIG. 13, the wearable device 101 may display a screen 1301 on the display. The wearable device 101 may represent a virtual space on the screen 1301. The wearable device 101 may display an icon 1305 on the screen 1301. The icon may be displayed on the display to receive an input for executing a designated software application. The software application may be executed to change information related to the field of view. For example, the wearable device 101 may execute a calibration application to increase accuracy of gaze tracking. For example, the wearable device 101 may execute an application for focus adjustment.

According to an embodiment, the wearable device 101 may identify whether the user's gaze is directed to the icon 1305 through a camera included in the wearable device 101. When obtaining a user input (touch input, or click input) while identifying that the user's gaze is directed to the icon 1305, the wearable device 101 may process as an input related to a software application (e.g., the calibration application to increase the accuracy of gaze tracking, or the application for focus adjustment).

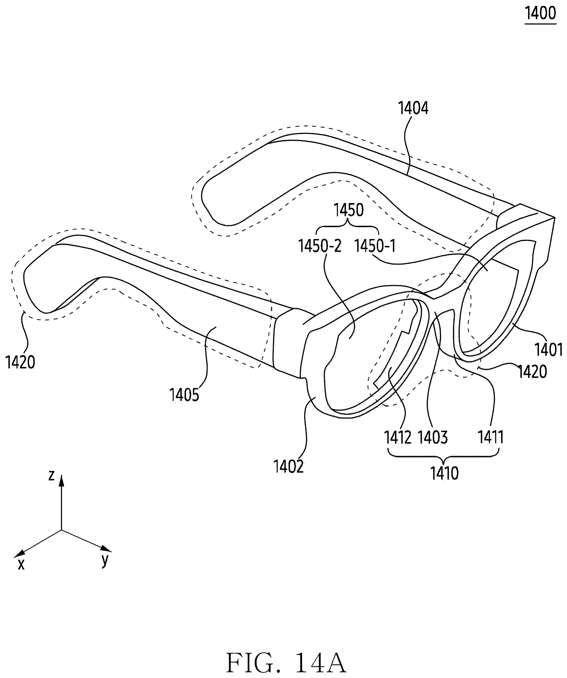

FIG. 14A illustrates an example of a perspective view of a wearable device according to an embodiment.

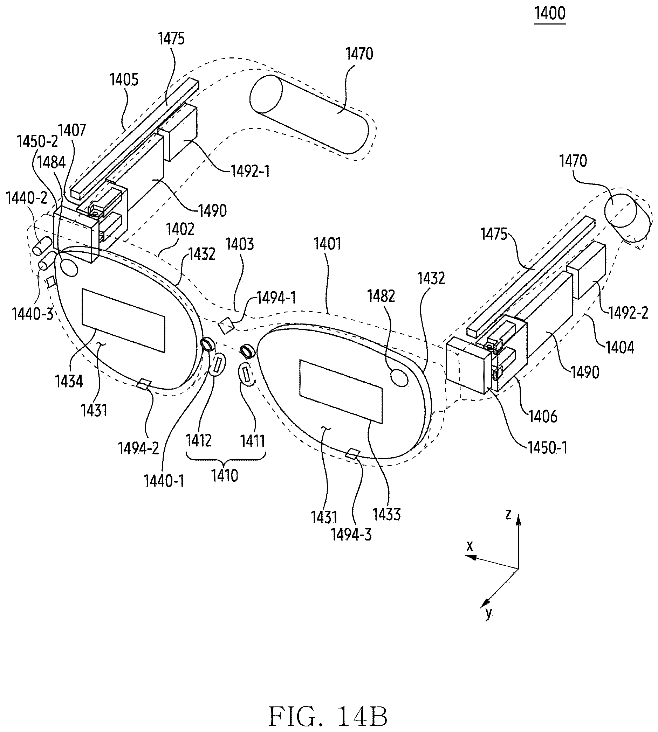

FIG. 14B illustrates an example of one or more hardware disposed in a wearable device according to an embodiment. A wearable device 1400 of FIGS. 14A to 14B may include the wearable device 101 of FIGS. 1 to 3B and 13. The wearable device 1400 of FIGS. 14A to 14B may include a wearable device performing the operations of FIGS. 4A to 7 and/or 10. The wearable device 1400 of FIGS. 14A to 14B may include the wearable device 101 of FIGS. 8A to 9A and 11A to 11C. The wearable device 1400 of FIGS. 14A to 14B may include the wearable device described with reference to FIG. 12.

According to an embodiment, the wearable device 1400 may be wearable on a portion of the user's body. The wearable device 1400 may provide augmented reality (AR), virtual reality (VR), or mixed reality (MR) combining the augmented reality and the virtual reality to a user wearing the wearable device 1400. For example, the wearable device 1400 may output a virtual reality image through at least one display 1450, in response to a user's preset gesture obtained through a motion recognition camera 1440-2 of FIG. 14B.

According to an embodiment, the at least one display 1450 may provide visual information to a user. The at least one display 1450 may include the display 220 of FIG. 2. For example, the at least one display 1450 may include a transparent or translucent lens. The at least one display 1450 may include a first display 1450-1 and/or a second display 1450-2 spaced apart from the first display 1450-1. For example, the first display 1450-1 and the second display 1450-2 may be disposed at positions corresponding to the user's left and right eyes, respectively.

Referring to FIG. 14B, the at least one display 1450 may form a display area on the lens to provide a user wearing the wearable device 1400 with visual information included in ambient light passing through the lens and other visual information distinct from the visual information. The lens may be formed based on at least one of a fresnel lens, a pancake lens, or a multi-channel lens. The display area formed by the at least one display 1450 may be formed on the second surface 1432 of the first surface 1431 and the second surface 1432 of the lens. When the user wears the wearable device 1400, ambient light may be transmitted to the user by being incident on the first surface 1431 and being penetrated through the second surface 1432. For another example, the at least one display 1450 may display a virtual reality image to be coupled with a reality screen transmitted through ambient light. The virtual reality image outputted from the at least one display 1450 may be transmitted to eyes of the user, through one or more hardware (e.g., optical devices 1482 and 1484, and/or at least one waveguides 1433 and 1434) included in the wearable device 1400.

According to an embodiment, the wearable device 1400 may include waveguides 1433 and 1434 that transmit light transmitted from the at least one display 1450 and relayed by the at least one optical device 1482 and 1484 by diffracting to the user. The waveguides 1433 and 1434 may be formed based on at least one of glass, plastic, or polymer. A nano pattern may be formed on at least a portion of the outside or inside of the waveguides 1433 and 1434. The nano pattern may be formed based on a grating structure having a polygonal or curved shape. Light incident to an end of the waveguides 1433 and 1434 may be propagated to another end of the waveguides 1433 and 1434 by the nano pattern. The waveguides 1433 and 1434 may include at least one of at least one diffraction element (e.g., a diffractive optical element (DOE), a holographic optical element (HOE)), and a reflection element (e.g., a reflection mirror). For example, the waveguides 1433 and 1434 may be disposed in the wearable device 1400 to guide a screen displayed by the at least one display 1450 to the user's eyes. For example, the screen may be transmitted to the user's eyes through total internal reflection (TIR) generated in the waveguides 1433 and 1434.

According to an embodiment, the wearable device 1400 may analyze an object included in a real image collected through a photographing camera 1440-3, combine with a virtual object corresponding to an object that become a subject of augmented reality provision among the analyzed object, and display on the at least one display 1450. The virtual object may include at least one of text and images for various information associated with the object included in the real image. The wearable device 1400 may analyze the object based on a multi-camera such as a stereo camera. For the object analysis, the wearable device 1400 may execute time-of-flight (ToF) and/or simultaneous localization and mapping (SLAM) supported by the multi-camera. The user wearing the wearable device 1400 may watch an image displayed on the at least one display 1450.

According to an embodiment, a frame may be configured with a physical structure in which the wearable device 1400 may be worn on the user's body. According to an embodiment, the frame may be configured so that when the user wears the wearable device 1400, the first display 1450-1 and the second display 1450-2 may be positioned corresponding to the user's left and right eyes. The frame may support the at least one display 1450. For example, the frame may support the first display 1450-1 and the second display 1450-2 to be positioned at positions corresponding to the user's left and right eyes.

Referring to FIG. 14A, according to an embodiment, the frame may include an area 1420 at least partially in contact with the portion of the user's body in case that the user wears the wearable device 1400. For example, the area 1420 of the frame in contact with the portion of the user's body may include an area in contact with a portion of the user's nose, a portion of the user's ear, and a portion of the side of the user's face that the wearable device 1400 contacts. According to an embodiment, the frame may include a nose pad 1410 that is contacted on the portion of the user's body. When the wearable device 1400 is worn by the user, the nose pad 1410 may be contacted on the portion of the user's nose. The frame may include a first temple 1404 and a second temple 1405 that is contacted on another portion of the user's body that is distinct from the portion of the user's body.

According to an embodiment, the frame may include a first rim 1401 surrounding at least a portion of the first display 1450-1, a second rim 1402 surrounding at least a portion of the second display 1450-2, a bridge 1403 disposed between the first rim 1401 and the second rim 1402, a first pad 1411 disposed along a portion of the edge of the first rim 1401 from one end of the bridge 1403, a second pad 1412 disposed along a portion of the edge of the second rim 1402 from the other end of the bridge 1403, the first temple 1404 extending from the first rim 1401 and fixed to a portion of the wearer's ear, and the second temple 1405 extending from the second rim 1402 and fixed to a portion of the ear opposite to the ear. The first pad 1411 and the second pad 1412 may be in contact with the portion of the user's nose, and the first temple 1404 and the second temple 1405 may be in contact with a portion of the user's face and the portion of the user's ear. The temples 1404 and 1405 may be rotatably connected to the rim through hinge units 1406 and 1407 of FIG. 14B. The first temple 1404 may be rotatably connected with respect to the first rim 1401 through the first hinge unit 1406 disposed between the first rim 1401 and the first temple 1404. The second temple 1405 may be rotatably connected with respect to the second rim 1402 through the second hinge unit 1407 disposed between the second rim 1402 and the second temple 1405. According to an embodiment, the wearable device 1400 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 1400 may include hardware (e.g., hardware described above based on the block diagram of FIG. 2) that performs various functions. For example, the hardware may include a battery 1470, an antenna 1475, optical devices 1482 and 1484, speakers 1492-1 and 1492-2, microphones 1494-1, 1494-2, and 1494-3, a depth sensor module (not illustrated), and/or a printed circuit board (PCB) 1490. Various hardware may be disposed in the frame.

According to an embodiment, the microphones 1494-1, 1494-2, and 1494-3 of the wearable device 1400 may obtain a sound signal, by being disposed on at least a portion of the frame. The first microphone 1494-1 disposed on the nose pad 1410, the second microphone 1494-2 disposed on the second rim 1402, and the third microphone 1494-3 disposed on the first rim 1401 are illustrated in FIG. 14B, but the number and disposition of the microphone 1494 are not limited to an embodiment of FIG. 14B. In a case that the number of the microphone 1494 included in the wearable device 1400 is two or more, the wearable device 1400 may identify a direction of the sound signal by using a plurality of microphones disposed on different portions of the frame.

According to an embodiment, the optical devices 1482 and 1484 may transmit a virtual object transmitted from the at least one display 1450 to the wave guides 1433 and 1434. For example, the optical devices 1482 and 1484 may be projectors. The optical devices 1482 and 1484 may be disposed adjacent to the at least one display 1450 or may be included in the at least one display 1450 as a portion of the at least one display 1450. The first optical device 1482 may correspond to the first display 1450-1, and the second optical device 1484 may correspond to the second display 1450-2. The first optical device 1482 may transmit light outputted from the first display 1450-1 to the first waveguide 1433, and the second optical device 1484 may transmit light outputted from the second display 1450-2 to the second waveguide 1434.

In an embodiment, a camera 1440 may include an eye tracking camera (ET CAM) 1440-1, a motion recognition camera 1440-2 and/or the photographing camera 1440-3. The photographing camera 1440-3, the eye tracking camera 1440-1, and the motion recognition camera 1440-2 may be disposed at different positions on the frame and may perform different functions. The photographing camera 1440-3, the eye tracking camera 1440-1, and the motion recognition camera 1440-2 may be an example of the camera 230 of FIG. 2. The eye tracking camera 1440-1 may output data indicating a gaze of the user wearing the wearable device 1400. For example, the wearable device 1400 may detect the gaze from an image including the user's pupil, obtained through the eye tracking camera 1440-1. An example in which the eye tracking camera 1440-1 is disposed toward the user's right eye is illustrated in FIG. 14B, but the embodiment is not limited thereto, and the eye tracking camera 1460-1 may be disposed alone toward the user's left eye or may be disposed toward two eyes.

In an embodiment, the photographing camera 1440-3 may photograph a real image or background to be matched with a virtual image in order to implement the augmented reality or mixed reality content. The photographing camera may photograph an image of a specific object existing at a position viewed by the user and may provide the image to the at least one display 1450. The at least one display 1450 may display one image in which a virtual image provided through the optical devices 1482 and 1484 is overlapped with information on the real image or background including the image of the specific object obtained by using the photographing camera. In an embodiment, the photographing camera may be disposed on the bridge 1403 disposed between the first rim 1401 and the second rim 1402.

In an embodiment, the eye tracking camera 1440-1 may implement a more realistic augmented reality by matching the user's gaze with the visual information provided on the at least one display 1450, by tracking the gaze of the user wearing the wearable device 1400. For example, when the user looks at the front, the wearable device 1400 may naturally display environment information associated with the user's front on the at least one display 1450 at a position where the user is positioned. The eye tracking camera 1440-1 may be configured to capture an image of the user's pupil in order to determine the user's gaze. For example, the eye tracking camera 1440-1 may receive gaze detection light reflected from the user's pupil and may track the user's gaze based on the position and movement of the received gaze detection light. In an embodiment, the eye tracking camera 1440-1 may be disposed at a position corresponding to the user's left and right eyes. For example, the eye tracking camera 1440-1 may be disposed in the first rim 1401 and/or the second rim 1402 to face the direction in which the user wearing the wearable device 1400 is positioned.

The motion recognition camera 1440-2 may provide a specific event to the screen provided on the at least one display 1450 by recognizing the movement of the whole or portion of the user's body, such as the user's torso, hand, or face. The motion recognition camera 1440-2 may obtain a signal corresponding to motion by recognizing the user's gesture, and may provide a display corresponding to the signal to the at least one display 1450. A processor (not illustrated) included in the wearable device 1400 may identify a signal corresponding to the operation and may perform a preset function based on the identification. In an embodiment, the motion recognition camera 1440-2 may be disposed on the first rim 1401 and/or the second rim 1402.

In an embodiment, the camera 1440 included in the wearable device 1400 is not limited to the above-described eye tracking camera 1440-1 and the motion recognition camera 1440-2. For example, the wearable device 1400 may identify an external object included in the FoV by using the photographing camera 1440-3 disposed toward the user's FoV. The wearable device 1400 identifying the external object may be performed through an object identification application. The wearable device 1400 may obtain a depth map, based on a sensor for identifying a distance between the wearable device 1400 and the external object, such as a depth sensor and/or a time of flight (ToF) sensor.

According to an embodiment, the wearable device 1400 may include the printed circuit board (PCB) 1490. The PCB 1490 may be included in at least one of the first temple 1404 or the second temple 1405. The PCB 1490 may include an interposer disposed between at least two sub PCBs. On the PCB 1490, one or more hardware (e.g., hardware illustrated by the blocks described above with reference to FIG. 2) included in the wearable device 1400 may be disposed. The wearable device 1400 may include a flexible PCB (FPCB) for interconnecting the hardware.

According to an embodiment, the wearable device 1400 may include at least one of a gyro sensor, a gravity sensor, and/or an acceleration sensor for detecting the posture of the wearable device 1400 and/or the posture of a body part (e.g., a head) of the user wearing the wearable device 1400. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1400 may identify the user's motion and/or gesture performed to execute or stop a specific function of the wearable device 1400 based on the IMU.

According to an embodiment, the wearable device 1400 may execute a software application (e.g., an application for a focus adjustment or a calibration application for increasing the accuracy of gaze tracking), based on identifying whether the movement of the wearable device 1400 satisfies a designated condition. The designated condition may be whether the movement of the wearable device 1400 according to the contact is identified to exceed a reference number of times during a reference time. According to an embodiment, as time passes after adjusting the focus of lens sets, the focus of the wearable device 1400 may become blurred. Therefore, the reference number of times included in a trigger condition may be changed according to intervals. According to an embodiment, as the magnitude of the motion requested by the content increases, the focus of the wearable device 1400 may become blurred. Therefore, the reference number of times included in the trigger condition may be changed according to a motion level corresponding to the content.

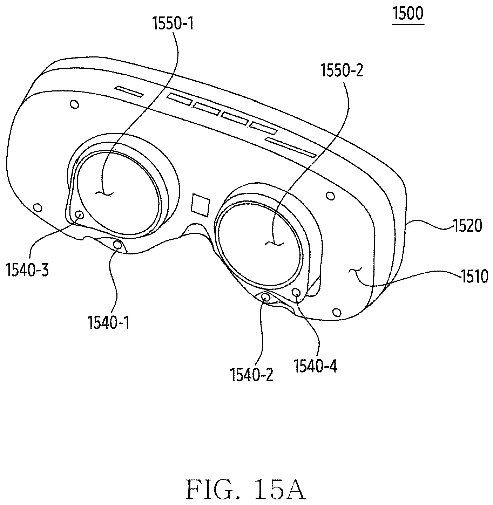

FIGS. 15A to 15B illustrate an example of an exterior of a wearable device according to an embodiment.

Referring to FIG. 15A, according to an embodiment, the first surface 1510 of the wearable device 1500 may have an attachable shape on the user's body part (e.g., the user's face). Although not illustrated, the wearable device 1500 may further include a strap for being fixed on the user's body part, and/or one or more temples (e.g., the first temple 1404 and/or the second temple 1405 of FIGS. 14A to 14B). A first display 1550-1 for outputting an image to the left eye among the user's two eyes and a second display 1550-2 for outputting an image to the right eye among the user's two eyes may be disposed on the first surface 1510. The wearable device 1500 may further include rubber or silicon packing, which are formed on the first surface 1510, for preventing interference by light (e.g., ambient light) different from the light emitted from the first display 1550-1 and the second display 1550-2.

According to an embodiment, the wearable device 1500 may include cameras 1540-3 and 1540-4 for photographing and/or tracking two eyes of the user adjacent to each of the first display 1550-1 and the second display 1550-2. The cameras 1540-3 and 1540-4 may be referred to as the ET camera. According to an embodiment, the wearable device 1500 may include cameras 1540-1 and 1540-2 for photographing and/or recognizing the user's face. The cameras 1540-1 and 1540-2 may be referred to as a FT camera.

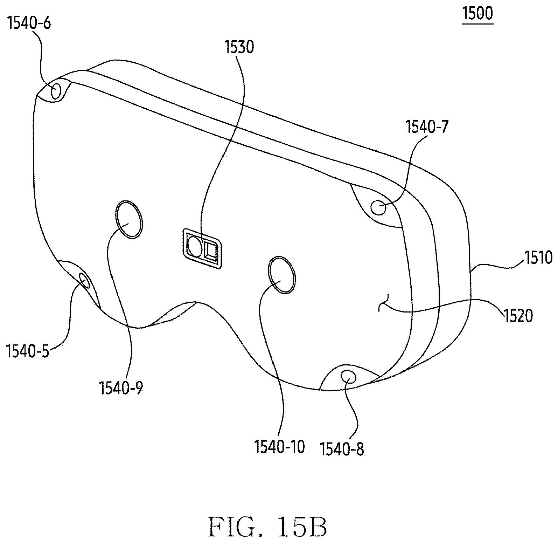

Referring to FIG. 15B, a camera (e.g., cameras 1540-5, 1540-6, 1540-7, 1540-8, 1540-9, and 1540-10), and/or a sensor (e.g., the depth sensor 1530) for obtaining information associated with the external environment of the wearable device 1500 may be disposed on the second surface 1520 opposite to the first surface 1510 of FIG. 15A. For example, cameras 1540-5, 1540-6, 1540-7, 1540-8, 1540-9, and 1540-10 may be disposed on the second surface 1520 in order to recognize an external object. For example, the wearable device 1500 may use the cameras 1540-9 and 1540-10 to obtain an image and/or media to be transmitted to each of the user's two eyes. The camera 1540-9 may be disposed on the second surface 1520 of the wearable device 1500 to obtain a frame to be displayed through the second display 1550-2 corresponding to the right eye among the two eyes. The camera 1540-10 may be disposed on the second surface 1520 of the wearable device 1500 to obtain a frame to be displayed through the first display 1550-1 corresponding to the left eye among the two eyes.

In an embodiment, a camera (e.g., cameras 1540-5, 1540-6, 1540-7, 1540-8, 1540-9, and 1540-10) for obtaining information associated with an external environment included in the wearable device 1500 may be arranged toward the user's FoV. The wearable device 1500 may identify an external object included in the FoV, by using the camera (e.g., cameras 1540-5, 1540-6, 1540-7, 1540-8, 1540-9, 1540-10) included in the wearable device 1500. The wearable device 1500 identifying an external object may be performed through an object identification application. The wearable device 1500 may obtain a depth map based on a sensor for identifying a distance between the wearable device 1500 and an external object, such as a depth sensor and/or a time of flight (ToF) sensor. The wearable device 1500 may identify an object area corresponding to an external object, based on the depth map. The wearable device 1500 may display a portion of an image corresponding to an external object of the image obtained from the camera (e.g., cameras 1540-5, 1540-6, 1540-7, 1540-8, 1540-9, and 1540-10) through the display 1550-1 and 1550-2. The portion of the image may correspond to an object area.

According to an embodiment, the wearable device 1500 may include a depth sensor 1530 disposed on the second surface 1520 to identify a distance between the wearable device 1500 and an external object. By using the depth sensor 1530, the wearable device 1500 may obtain spatial information (e.g., a depth map) on at least a portion of the FoV of the user wearing the wearable device 1500.

According to an embodiment, the wearable device 1500 may include at least one of a gyro sensor, a gravity sensor, and/or an acceleration sensor for detecting a posture of the wearable device 1500 and/or a posture of a body part (e.g., a head) of a user wearing the wearable device 1500. Each of the gravity sensor and the acceleration sensor may measure acceleration of gravity and/or acceleration based on designated three-dimensional axes (e.g., x-axis, y-axis, and z-axis) perpendicular to each other. The gyro sensor may measure the angular velocity of each of the designated three-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1500 may identify a user's motion and/or gesture performed to execute or stop a specific function of the wearable device 1500, based on the IMU. According to an embodiment, the wearable device 1500 may identify changed position information of the user, based on the IMU. The wearable device 1500 may identify an object area having a spaced position, based on the changed position of the wearable device 1500.

According to an embodiment, the wearable device 1500 may execute a software application (e.g., an application for focus adjustment or a calibration application for increasing accuracy of gaze tracking), based on identifying whether the movement of the wearable device 1500 satisfies a designated condition. The designated condition may be whether the movement of the wearable device 1500 in accordance with a contact is identified as greater than a reference number of times during a reference time. According to an embodiment, as time passes after adjusting the focus of the lens sets, the focus of the wearable device 1500 may become blurred. Therefore, the reference number of times included in a trigger condition may be changed according to intervals. According to an embodiment, as the magnitude of the motion requested by the content increases, the focus of the wearable device 1500 may become blurred. Therefore, the reference number of times included in the trigger condition may be changed according to the motion level corresponding to the content.

As described above, according to an embodiment, a wearable device may comprise at least one first sensor, a display, lens sets arranged with respect to the display, at least one actuator for the lens sets, and a processor. The processor may be configured to, while a screen provided through each of the lens sets is displayed on the display, identify movements related to the wearable device through the at least one first sensor. The processor may be configured to identify whether a number of times of the movements identified during a reference time is greater than a first reference number of times. The processor may be configured to, in response to the number of times greater than the first reference number of times, adjust a focus of each of the lens sets for providing the screen displayed on the display through the at least one actuator. The processor may be configured to, based on identifying that the number of times of the movements identified during the reference time is less than or equal to a second reference number of times greater than the first reference number of times, within a designated time interval after adjusting the focus of each of the lens sets, maintain the adjusted focus.

According to an embodiment, each of the lens sets arranged with respect to the display may include a first lens and a second lens. The processor may be configured to adjust the focus of each of the lens sets, by adjusting a distance between the first lens and the second lens through the at least one actuator.

According to an embodiment, the processor may be configured to, based on identifying the number of times of the movements identified during the reference time greater than a third reference number of times, within a designated first time interval after adjusting the focus of each of the lens sets, adjust the focus of each of the lens sets through the at least one actuator. The processor may be configured to, based on identifying the number of times of the movements identified during the reference time greater than a fourth reference number of times less than the third reference number of times during the reference time, within a designated second time interval after adjusting the focus of each of the lens sets, adjust the focus of each of the lens sets through the at least one actuator. The second time interval may be after the first time interval.

According to an embodiment, the wearable device may comprise at least one second sensor. The processor may be configured to identify a contact greater than or equal to reference extent on a reference area of the wearable device through the at least one second sensor, while the screen is displayed on the display. The processor may be configured to identify, through the at least one first sensor, the movements related to the wearable device in accordance with the contact.

According to an embodiment, the processor may be configured to identify, in accordance with magnitude of a motion requested by content included in the screen, a motion grade of the content. The processor may be configured to, in response to the number of times of the movements in accordance with the contact identified during the reference time, greater than a fifth reference number of times, adjust the focus of each of the lens sets for providing the screen displayed on the display through the at least one actuator, based on identifying a first motion grade. The processor may be configured to, in response to the number of times of the movements in accordance with the contact identified during the reference time, greater than a sixth reference number of times less than the fifth reference number of times, adjust the focus of each of the lens sets for providing the screen displayed on the display through the at least one actuator, based on identifying a second motion grade of content in which magnitude of a motion smaller than the magnitude of the motion corresponding to the first motion grade is requested.

According to an embodiment, the wearable device may comprise a first housing in which the display is disposed, and a second housing connected to the first housing. The at least one second sensor may include a touch sensor included in a second surface, which is opposite to a first surface on which the display is disposed and spaced apart from the first surface, and the touch sensor included in a fourth surface, which is opposite to a third surface facing a user when the user wears the wearable device.

According to an embodiment, the processor may be configured to, in case that the movement in accordance with the contact is identified with respect to a first portion based on a center line of the second surface of the first housing, adjust a focus of a lens set, which is one of the lens sets and corresponds to the first portion. The processor may be configured to, in case that the movement in accordance with the contact is identified with respect to a second portion different from the first portion based on the center line of the second surface of the first housing, adjust a focus of a lens set, which is one of the lens sets and corresponds to the second portion.

According to an embodiment, the processor may be configured to, in case that the movement in accordance with the contact is identified with respect to the first portion based on the center line of the second surface of the first housing, adjust a distance between the lens sets, by moving the lens set, which is one of the lens sets and corresponds to the first portion. The processor may be configured to, in case that the movement in accordance with the contact is identified with respect to the second portion different from the first portion based on the center line of the second surface of the first housing, adjust the distance between the lens sets, by moving the lens set, which is one of the lens sets and corresponds to the second portion.

As described above, according to an embodiment, a wearable device may comprise at least one inertial measurement unit (IMU) sensor, at least one touch sensor, a display for providing a virtual space, lens sets, at least one actuator for the lens sets, and a processor. The processor may be configured to identify a touch input through the at least one touch sensor, while a virtual space provided through each of the lens sets is displayed on the display. The processor may be configured to identify movements of the wearable device in accordance with the touch input through the at least one IMU sensor. The processor may be configured to identify whether a frequency of the movements identified during a reference time is greater than a first frequency. The processor may be configured to adjust, through the at least one actuator, a focus of each of the lens sets for providing the virtual space displayed on the display, in response to the frequency exceeding the first frequency. The processor may be configured to adjust the focus of each of the lens sets, based on identifying that the frequency of the movements identified during the reference time is greater than a second frequency greater than the first frequency, within a designated time interval after adjusting the at least one actuator.

According to an embodiment, each of the lens sets may include a first lens and a second lens. The processor may be configured to adjust the focus of each of the lens sets, by adjusting a distance between the first lens and the second lens through the at least one actuator.

According to an embodiment, the processor may be configured to, based on identifying the frequency of the movements identified during the reference time greater than a third frequency, within a designated first time interval after adjusting the focus of each of the lens sets, adjust the focus of each of the lens sets through the at least one actuator. The processor may be configured to, based on identifying the frequency of the movements identified, greater than a fourth frequency less than the third frequency during the reference time, within a designated second time interval after adjusting the focus of each of the lens sets, adjust the focus of each of the lens sets through the at least one actuator. The second time interval may be after the first time interval.

According to an embodiment, the processor may be configured to identify the touch input having a contact surface greater than or equal to reference extent on a reference area of the wearable device, through the at least one touch sensor, while the virtual space is displayed on the display.

According to an embodiment, the processor may be configured to identify, in accordance with magnitude of a motion requested in content related to the virtual space, a motion grade of the content. The processor may be configured to, in response to the frequency of the movements in accordance with the contact input identified during the reference time, greater than a fifth frequency, adjust the focus of each of the lens sets for providing the virtual space displayed on the display through the at least one actuator, based on identifying a first motion grade. The processor may be configured to, in response to the frequency of the movements in accordance with the touch input identified during the reference time, greater than a sixth frequency less than the fifth frequency, adjust the focus of each of the lens sets for providing the virtual space displayed on the display through the at least one actuator, based on identifying a second motion grade of content in which magnitude of a motion smaller than the magnitude of the motion corresponding to the first motion grade is requested.

According to an embodiment, the wearable device may comprise a first housing in which the display is disposed, and a second housing connected to the first housing. The at least one touch sensor may be included in a second surface, which is opposite to a first surface on which the display is disposed and spaced apart from the first surface, and a fourth surface, which is opposite to a third surface facing a user when the user wears the wearable device.

According to an embodiment, the processor may be configured to, in case that the movement in accordance with the touch input is identified with respect to a first portion based on a center line of the second surface of the first housing, adjust a focus of a lens set, which is one of the lens sets and corresponds to the first portion. The processor may be configured to, in case that the movement in accordance with the touch input is identified with respect to a second portion different from the first portion based on the center line of the second surface of the first housing, adjust a focus of a lens set, which is one of the lens sets and corresponds to the second portion.

According to an embodiment, the processor may be configured to, in case that the movement in accordance with the touch input is identified with respect to the first portion based on the center line of the second surface of the first housing, adjust a distance between the lens sets, by moving the lens set, which is one of the lens sets and corresponds to the first portion. The processor may be configured to, in case that the movement in accordance with the touch input is identified with respect to the second portion different from the first portion based on the center line of the second surface of the first housing, adjust the distance between the lens sets, by moving the lens set, which is one of the lens sets and corresponds to the second portion.

As described above, according to an embodiment, a method executed by a wearable device may comprise, while a screen provided through each of lens sets arranged with respect to a display is displayed on the display, identifying movements related to the wearable device through at least one first sensor. The method may comprise identifying whether a number of times of the movements identified during a reference time is greater than a first reference number of times. The method may comprise, in response to the number of times greater than the first reference number of times, adjusting a focus of each of the lens sets for providing the screen displayed on the display through the at least one actuator. The method may comprise, based on identifying that the number of times of the movements identified during the reference time is less than or equal to a second reference number of times greater than the first reference number of times, within a designated time interval after adjusting the at least one actuator, maintaining the adjusted focus.

According to an embodiment, each of the lens sets arranged with respect to the display may include a first lens and a second lens. The method may comprise adjusting the focus of each of the lens sets, by adjusting a distance between the first lens and the second lens through the at least one actuator.

According to an embodiment, the method may comprise, based on identifying the number of times of the movements identified during the reference time greater than a third reference number of times, within a designated first time interval after adjusting the focus of each of the lens sets, adjusting the focus of each of the lens sets through the at least one actuator. The method may comprise, based on identifying the number of times of the movements identified during the reference time greater than a fourth reference number of times less than the third reference number of times, within a designated second time interval after adjusting the focus of each of the lens sets, adjusting the focus of each of the lens sets through the at least one actuator. The second time interval may be after the first time interval.

According to an embodiment, the method may comprise identifying a contact greater than or equal to reference extent on a reference area of the wearable device through at least one second sensor, while the screen is displayed on the display. The method may comprise identifying, through the at least one first sensor, the movements related to the wearable device in accordance with the contact.

As described above, according to an embodiment, a computer-readable storage medium storing one or more programs, the one or more programs may include instructions which, when executed by an electronic device including a processor, cause the wearable device to, while a screen provided through each of lens sets arranged with respect to a display is displayed on the display, identify movements related to the wearable device through at least one first sensor. The one or more programs may include instructions causing the wearable device to identify whether a number of times of the movements identified during a reference time is greater than a first reference number of times. The one or more programs may include instructions causing the wearable device to, in response to the number of times greater than the first reference number of times, adjust a focus of each of the lens sets for providing the screen displayed on the display through at least one actuator. The one or more programs may include instructions causing the wearable device to, based on identifying that the number of times of the movements identified during the reference time is less than or equal to a second reference number of times greater than the first reference number of times, within a designated time interval after adjusting the at least one actuator, maintain the adjusted focus.

According to an embodiment, each of the lens sets arranged with respect to the display may include a first lens and a second lens. The one or more programs may include instructions causing the wearable device to adjust the focus of each of the lens sets, by adjusting a distance between the first lens and the second lens through the at least one actuator.

According to an embodiment, the one or more programs may include instructions causing the wearable device to, based on identifying the number of times of the movements identified during the reference time greater than a third reference number of times, within a designated first time interval after adjusting the focus of each of the lens sets, adjust the focus of each of the lens sets through the at least one actuator. The one or more programs may include instructions causing the wearable device to, based on identifying the number of times of the movements identified during the reference time greater than a fourth reference number of times less than the third reference number of times, within a designated second time interval after adjusting the focus of each of the lens sets, adjust the focus of each of the lens sets through the at least one actuator. The second time interval may be after the first time interval.

According to an embodiment, the one or more programs may include instructions causing the wearable device to identify a contact greater than or equal to reference extent on a reference area of the wearable device through at least one second sensor, while the screen is displayed on the display. The one or more programs may include instructions causing the wearable device to identify, through the at least one first sensor, the movements related to the wearable device in accordance with the contact.

According to an embodiment, the one or more programs may include instructions causing the wearable device to identify, in accordance with magnitude of a motion requested by content included in the screen, a motion grade of the content. The one or more programs may include instructions causing the wearable device to, in response to the number of times of the movements in accordance with the contact identified during the reference time, greater than a fifth reference number of times, adjust the focus of each of the lens sets for providing the screen displayed on the display through the at least one actuator, based on identifying a first motion grade. The one or more programs may include instructions causing the wearable device to, in response to the number of times of the movements in accordance with the contact identified during the reference time, greater than a sixth reference number of times less than the fifth reference number of times, adjust the focus of each of the lens sets for providing the screen displayed on the display through the at least one actuator, based on identifying a second motion grade of content in which magnitude of a motion smaller than the magnitude of the motion corresponding to the first motion grade is requested.

According to an embodiment, the at least one second sensor may include a touch sensor included in a second surface, which is opposite to a first surface on which the display is disposed and spaced apart from the first surface, and the touch sensor included in a fourth surface, which is opposite to a third surface facing a user when the user wears the wearable device.

According to an embodiment, the one or more programs may include instructions causing the wearable device to, in case that the movement in accordance with the contact is identified with respect to a first portion based on a center line of the second surface of the first housing, adjust a focus of a lens set, which is one of the lens sets and corresponds to the first portion. The one or more programs may include instructions causing the wearable device to, in case that the movement in accordance with the contact is identified with respect to a second portion different from the first portion based on the center line of the second surface of the first housing, adjust a focus of a lens set, which is one of the lens sets and corresponds to the second portion.

According to an embodiment, the one or more programs may include instructions causing the wearable device to, in case that the movement in accordance with the contact is identified with respect to the first portion based on the center line of the second surface of the first housing, adjust a distance between the lens sets, by moving the lens set, which is one of the lens sets and corresponds to the first portion. The one or more programs may include instructions causing the wearable device to, in case that the movement in accordance with the contact is identified with respect to the second portion different from the first portion based on the center line of the second surface of the first housing, adjust the distance between the lens sets, by moving the lens set, which is one of the lens sets and corresponds to the second portion.

According to an embodiment, a wearable device 101 may comprise at least one first sensor 240, a display 220, lens sets 250; 111; 113 arranged with respect to the display 220, at least one actuator 260 for the lens sets 250; 111; 113, a processor, and memory storing instructions. The instructions, when executed by the processor, may cause the wearable device 101 to identify movements related to the wearable device 101 through the at least one first sensor 240 while a screen provided through each of the lens sets 250; 111; 113 is displayed on the display 220, identify whether a number of times of the movements identified during a reference time is greater than a first reference number of times, adjust a focus of each of the lens sets 250; 111; 113 for providing the screen displayed on the display 220 through the at least one actuator 260 in response to the number of times greater than the first reference number of times, and maintain the adjusted focus, based on identifying that the number of times of the movements identified during the reference time is less than or equal to a second reference number of times greater than the first reference number of times, within a designated time interval after adjusting the focus of each of the lens sets 250; 111; 113.

According to an embodiment, each of the lens sets 250; 111; 113 arranged with respect to the display 220 may include a first lens and a second lens. The instructions, when executed by the processor, may cause the wearable device 101 to adjust the focus of each of the lens sets 250; 111; 113, by adjusting a distance between the first lens and the second lens through the at least one actuator 260.

According to an embodiment, the instructions, when executed by the processor, may cause the wearable device 101 to adjust the focus of each of the lens sets 250; 111; 113 through the at least one actuator 260 based on identifying the number of times of the movements identified during the reference time greater than a third reference number of times, within a designated first time interval after adjusting the focus of each of the lens sets 250; 111; 113, and adjust the focus of each of the lens sets 250; 111; 113 through the at least one actuator 260 based on identifying the number of times of the movements identified during the reference time greater than a fourth reference number of times less than the third reference number of times during the reference time, within a designated second time interval after adjusting the focus of each of the lens sets 250; 111; 113. The second time interval may be after the first time interval.

According to an embodiment, the wearable device may comprise at least one second 240 sensor. The instructions, when executed by the processor, may cause the wearable device 101 to identify a contact greater than or equal to reference extent on a reference area of the wearable device 101 through the at least one second sensor 240, while the screen is displayed on the display 220, and identify, through the at least one first sensor 240, the movements related to the wearable device 101 in accordance with the contact.

According to an embodiment, the instructions, when executed by the processor, may cause the wearable device 101 to identify, in accordance with magnitude of a motion requested by content included in the screen, a motion grade of the content, in response to the number of times of the movements in accordance with the contact identified during the reference time, greater than a fifth reference number of times, adjust the focus of each of the lens sets 250; 111; 113 for providing the screen displayed on the display 220 through the at least one actuator 260, based on identifying a first motion grade, and in response to the number of times of the movements in accordance with the contact identified during the reference time, greater than a sixth reference number of times less than the fifth reference number of times, adjust the focus of each of the lens sets 250; 111; 113 for providing the screen displayed on the display 220 through the at least one actuator 260, based on identifying a second motion grade of content in which magnitude of a motion smaller than the magnitude of the motion corresponding to the first motion grade is requested.

According to an embodiment, the instructions, when executed by the processor, may cause the wearable device 101 to, in case that the movement in accordance with the contact is identified with respect to a first portion based on a center line of the second surface of the first housing 103; 303, adjust a focus of a lens set, which is one of the lens sets 250; 111; 113 and corresponds to the first portion, and in case that the movement in accordance with the contact is identified with respect to a second portion different from the first portion based on the center line of the second surface of the first housing 103; 303, adjust a focus of a lens set, which is one of the lens sets 250; 111; 113 and corresponds to the second portion.

According to an embodiment, the instructions, when executed by the processor, may cause the wearable device 101 to, in case that the movement in accordance with the contact is identified with respect to the first portion based on the center line of the second surface of the first housing 103; 303, adjust a distance between the lens sets 250; 111; 113, by moving the lens set, which is one of the lens sets 250; 111; 113 and corresponds to the first portion, and in case that the movement in accordance with the contact is identified with respect to the second portion different from the first portion based on the center line of the second surface of the first housing 103; 303, adjust the distance between the lens sets 250; 111; 113, by moving the lens set, which is one of the lens sets 250; 111; 113 and corresponds to the second portion.

According to an embodiment, a non-transitory computer readable storage medium is provided. The non-transitory computer readable storage medium may comprise memory storing instructions. The instructions, when executed by a processor of a wearable device, may cause the wearable device to, while a screen provided through each of lens sets 250; 111; 113 arranged with respect to a display 220 is displayed on the display 220, identify movements related to the wearable device 101 through at least one first sensor 240, identify whether a number of times of the movements identified during a reference time is greater than a first reference number of times, in response to the number of times greater than the first reference number of times, adjust a focus of each of the lens sets 250; 111; 113 for providing the screen displayed on the display 220 through at least one actuator 260, and based on identifying that the number of times of the movements identified during the reference time is less than or equal to a second reference number of times greater than the first reference number of times, within a designated time interval after adjusting the at least one actuator 260, maintain the adjusted focus.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs), another type of optical storage device, or a magnetic cassette. Alternatively, it may be stored in a memory composed of a combination of some or all of them. In addition, a plurality of configuration memories may be included.

Additionally, such a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also access a device performing an embodiment of the present disclosure.

In the above-described specific embodiments of the present disclosure, components included in the disclosure are expressed in the singular or plural according to the presented specific embodiment. However, the singular or plural expression is selected appropriately for a situation presented for convenience of explanation, and the present disclosure is not limited to the singular or plural component, and even a component expressed in the plural may be composed of a singular number, or a component represented in the singular may be composed of a plural number.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, but of course, various modifications are possible without departing from the scope of the present disclosure.

## Claims

1. A wearable device 101 comprising:
at least one first sensor 240;
a display 220;
lens sets 250; 111; 113 arranged with respect to the display 220;
at least one actuator 260 for the lens sets 250, 111, 113;
a processor; and
memory storing instructions;
wherein the instructions, when executed by the processor, cause the wearable device 101 to:
while a screen provided through each of the lens sets 250; 111; 113 is displayed on the display 220, identify movements related to the wearable device 101 through the at least one first sensor 240;
identify whether a number of times of the movements identified during a reference time is greater than a first reference number of times;
in response to the number of times greater than the first reference number of times, adjust a focus of each of the lens sets 250; 111; 113 for providing the screen displayed on the display 220 through the at least one actuator 260; and
based on identifying that the number of times of the movements identified during the reference time is less than or equal to a second reference number of times greater than the first reference number of times, within a designated time interval after adjusting the focus of each of the lens sets 250; 111; 113, maintain the adjusted focus.

2. The wearable device of claim 1,
wherein each of the lens sets 250; 111; 113 arranged with respect to the display 220 includes a first lens and a second lens, and
wherein the instructions, when executed by the processor, cause the wearable device 101 to :
adjust the focus of each of the lens sets 250; 111; 113, by adjusting a distance between the first lens and the second lens through the at least one actuator 260.

3. The wearable device of any one of claims 1 to 2,
wherein the instructions, when executed by the processor, cause the wearable device 101 to :
based on identifying the number of times of the movements identified during the reference time greater than a third reference number of times, within a designated first time interval after adjusting the focus of each of the lens sets 250; 111; 113, adjust the focus of each of the lens sets 250; 111; 113 through the at least one actuator 260; and
based on identifying the number of times of the movements identified during the reference time greater than a fourth reference number of times less than the third reference number of times during the reference time, within a designated second time interval after adjusting the focus of each of the lens sets 250; 111; 113, adjust the focus of each of the lens sets 250; 111; 113 through the at least one actuator 260.

4. The wearable device of any one of claims 1 to 3, comprising at least one second 240 sensor, and
wherein the instructions, when executed by the processor, cause the wearable device 101 to :
identify a contact greater than or equal to reference extent on a reference area of the wearable device 101 through the at least one second sensor 240, while the screen is displayed on the display 220; and
identify, through the at least one first sensor 240, the movements related to the wearable device 101 in accordance with the contact.

5. The wearable device of any one of claims 1 to 4,
wherein the instructions, when executed by the processor, cause the wearable device 101 to :
identify, in accordance with magnitude of a motion requested by content included in the screen, a motion grade of the content;
in response to the number of times of the movements in accordance with the contact identified during the reference time, greater than a fifth reference number of times, adjust the focus of each of the lens sets 250; 111; 113 for providing the screen displayed on the display 220 through the at least one actuator 260, based on identifying a first motion grade; and
in response to the number of times of the movements in accordance with the contact identified during the reference time, greater than a sixth reference number of times less than the fifth reference number of times, adjust the focus of each of the lens sets 250; 111; 113 for providing the screen displayed on the display 220 through the at least one actuator 260, based on identifying a second motion grade of content in which magnitude of a motion smaller than the magnitude of the motion corresponding to the first motion grade is requested.

6. The wearable device of any one of claims 1 to 5, comprising:
a first housing 103; 303 in which the display 220 is disposed; and
a second housing 105; 305 connected to the first housing 103; 303; and
wherein the at least one second sensor 240 includes a touch sensor 240 included in a second surface, which is opposite to a first surface on which the display 220 is disposed and spaced apart from the first surface, and the touch sensor 240 included in a fourth surface, which is opposite to a third surface facing a user when the user wears the wearable device 101.

7. The wearable device of any one of claims 1 to 6,
wherein the instructions, when executed by the processor, cause the wearable device 101 to :
in case that the movement in accordance with the contact is identified with respect to a first portion based on a center line of the second surface of the first housing 103; 303, adjust a focus of a lens set, which is one of the lens sets 250; 111; 113 and corresponds to the first portion; and
in case that the movement in accordance with the contact is identified with respect to a second portion different from the first portion based on the center line of the second surface of the first housing 103; 303, adjust a focus of a lens set, which is one of the lens sets 250; 111; 113 and corresponds to the second portion.

8. The wearable device of any one of claims 1 to 7,
wherein the instructions, when executed by the processor, cause the wearable device 101 to :
in case that the movement in accordance with the contact is identified with respect to the first portion based on the center line of the second surface of the first housing 103; 303, adjust a distance between the lens sets 250; 111; 113, by moving the lens set, which is one of the lens sets 250; 111; 113 and corresponds to the first portion; and
in case that the movement in accordance with the contact is identified with respect to the second portion different from the first portion based on the center line of the second surface of the first housing 103; 303, adjust the distance between the lens sets 250; 111; 113, by moving the lens set, which is one of the lens sets 250; 111; 113 and corresponds to the second portion.

9. A method executed by a wearable device 101, the method comprising:
while a screen provided through each of lens sets 250; 111; 113 arranged with respect to a display 220 is displayed on the display 220, identifying movements related to the wearable device 101 through the at least one first sensor 240;
identifying whether a number of times of the movements identified during a reference time is greater than a first reference number of times;
in response to the number of times greater than the first reference number of times, adjusting a focus of each of the lens sets 250; 111; 113 for providing the screen displayed on the display 220 through the at least one actuator 260; and
based on identifying that the number of times of the movements identified during the reference time is less than or equal to a second reference number of times greater than the first reference number of times, within a designated time interval after adjusting the at least one actuator 260, maintaining the adjusted focus.

10. The method of claim 9,
wherein each of the lens sets 250; 111; 113 arranged with respect to the display 220 includes a first lens and a second lens, and
wherein the method comprises adjusting the focus of each of the lens sets 250; 111; 113, by adjusting a distance between the first lens and the second lens through the at least one actuator 260.

11. The method of any one of claims 9 to 10, comprising
based on identifying the number of times of the movements identified during the reference time greater than a third reference number of times, within a designated first time interval after adjusting the focus of each of the lens sets 250; 111; 113, adjusting the focus of each of the lens sets 250; 111; 113 through the at least one actuator 260; and
based on identifying the number of times of the movements identified during the reference time greater than a fourth reference number of times less than the third reference number of times, within a designated second time interval after adjusting the focus of each of the lens sets 250; 111; 113, adjusting the focus of each of the lens sets 250; 111; 113 through the at least one actuator 260, and
wherein the second time interval is after the first time interval.

12. The method of any one of claims 9 to 11, comprising
identifying a contact greater than or equal to reference extent on a reference area of the wearable device 101 through at least one second sensor 240, while the screen is displayed on the display 220; and
identifying, through the at least one first sensor 240, the movements related to the wearable device 101 in accordance with the contact.

13. The method of any one of claims 9 to 12, comprising
identifying, in accordance with magnitude of a motion requested by content included in the screen, a motion grade of the content;
in response to the number of times of the movements in accordance with the contact identified during the reference time, greater than a fifth reference number of times, adjusting the focus of each of the lens sets 250; 111; 113 for providing the screen displayed on the display 220 through the at least one actuator 260, based on identifying a first motion grade; and
in response to the number of times of the movements in accordance with the contact identified during the reference time, greater than a sixth reference number of times less than the fifth reference number of times, adjusting the focus of each of the lens sets 250; 111; 113 for providing the screen displayed on the display 220 through the at least one actuator 260, based on identifying a second motion grade of content in which magnitude of a motion smaller than the magnitude of the motion corresponding to the first motion grade is requested.

14. The method of any one of claims 9 to 13, comprising
in case that the movement in accordance with the contact is identified with respect to a first portion based on a center line of the second surface of the first housing 103; 303, adjusting a focus of a lens set, which is one of the lens sets 250; 111; 113 and corresponds to the first portion; and
in case that the movement in accordance with the contact is identified with respect to a second portion different from the first portion based on the center line of the second surface of the first housing 103; 303, adjusting a focus of a lens set, which is one of the lens sets 250; 111; 113 and corresponds to the second portion.

15. A non-transitory computer readable storage medium comprising memory storing instructions, the instructions, when executed by a processor of a wearable device, cause the wearable device to :
while a screen provided through each of lens sets 250; 111; 113 arranged with respect to a display 220 is displayed on the display 220, identify movements related to the wearable device 101 through at least one first sensor 240;
identify whether a number of times of the movements identified during a reference time is greater than a first reference number of times;
in response to the number of times greater than the first reference number of times, adjust a focus of each of the lens sets 250; 111; 113 for providing the screen displayed on the display 220 through at least one actuator 260; and
based on identifying that the number of times of the movements identified during the reference time is less than or equal to a second reference number of times greater than the first reference number of times, within a designated time interval after adjusting the at least one actuator 260, maintain the adjusted focus.
